# EUROPEAN PATENT SPECIFICATION

(11) **EP 1 407 163 B1**
(45) Date of publication and mention of the grant of the patent: **28.11.2007**
(21) Application number: 02747578.9
(22) Date of filing: 15.07.2002
(51) Int. Cl.: F16D 66/02

(54) **VEHICLE BRAKE FRICTION LINING CONDITION REPORTING ARRANGEMENT**
BREMSZUSTANDSERFASSUNGSEINRICHTUNG FÜR FAHRZEUGE
DISPOSITIF INDIQUANT L'ETAT DE LA GARNITURE DE FREIN D'UN VEHICULE AUTOMOBILE

(30) Priority: 17.07.2001 GB 0117371
(43) Date of publication of application: 14.04.2004
(73) Proprietor: FEDERAL-MOGUL FRICTION PRODUCTS LIMITED, Manchester M22 5TN (GB)
(72) Inventor: LIPSCOMB, Michael, John, Edward, Gateshead, Tyne & Wear NE8 4NR (GB); LAVENDER, Howard, Buxton, Derbyshire SK17 9NH (GB); HENRY, Brian, David, High Peak, Derbyshire SK23 7NS (GB)
(74) Representative: Hammersley, John
(86) International application number: PCT/GB2002/003289
(87) International publication number: WO 2003/008834

(56) References cited:
- EP-A- 1 151 875
- DE-A- 2 523 488
- DE-A- 4 231 107
- DE-A- 19 857 092
- US-A- 3 802 257
- US-A- 4 023 655
- US-A- 4 147 236
- US-A- 5 372 221

## Description

This invention relates to condition monitoring and reporting arrangements for friction linings of brakes of wheeled vehicles and particularly, but not exclusively, vehicles having a plurality of braked wheel axle sets and formed as a train of wheeled sub-components, such as a tractor locomotive and one or more trailer wagons.

Such vehicle trains are known in both road-going form, wherein the tractor locomotive is steerable by the driver to follow a path along a road, and in rail-going form, wherein the tractor locomotive and trailer wagons are constrained to follow a path defined by a rail track. The invention is particularly applicable to rail-borne vehicles and will herein be generally described in that context. However, and except where the context is clear, it is not intended that this should be a limitation.

The term "wheel axle set" is used in this specification to refer to one or more pair of wheels spaced apart along a common axis of rotation, irrespective of whether or not the wheels are independently suspended or coupled to each other directly by a physical axle, and "braked wheel axle set" is used to refer to a wheel axle set in which a brake system disposes brake friction linings to cooperate with braking surfaces on one or more wheels of the axle set or on an axle extending between, and possibly beyond, the wheels of the set, or on a shaft coupled to a wheel , axle or drive shaft therefor by gearing. Such friction linings may act directly on opposite planar surfaces as a disc brake, or the wheel periphery as a rim or tread brake or within a drum as a drum brake. Each friction lining is usually carried by a backing by which it is held with respect to the brake system and brake actuation forces transmitted, defining a friction pad which is substantially planar for a disc brake or of arcuate block or shoe form for a tread or drum brake. For convenience the term "friction pad" will be used hereinafter for all physical shapes.

Arrangements for monitoring physical and/or operating parameters of vehicle brakes for conditions considered important to safe and economic operation of the vehicle are well known, most frequently taking the form of determining and reporting by way of visible or audible indication when a friction lining has worn to a predetermined level of remaining thickness, but also of a form for determining and indicating when other conditions exist, such as an excessive temperature that is indicative of incorrect operation, for example, the lining being jammed with respect to the rubbing surface.

It is known for a predetermined condition of friction lining thickness to be sensed directly by disposing one or more conductors of electrical or electromagnetic signals (hereinafter referred to simply as "conductors") within or alongside the friction lining to interact with the brake rubbing surface when a predetermined amount of the friction lining remains, such interaction altering the conductive state of a said conductor. Such an arrangement is for instance known from DE-A-19857092. The altered state of any said conductor may comprise physical disruption of an erstwhile conductive path by abrasion from the rubbing surface or may comprise completion of a conductive path by way of the rubbing surface. The conductor or conductors extend externally of the friction lining by extended portions thereof and are coupled to a processing and indicating unit disposed elsewhere on the vehicle; if desired, the conductors associated with a plurality of brakes of the vehicle may be coupled together within the vehicle in order to determine and report different levels of friction lining condition information to the vehicle driver.

Whilst it is simple in principle to effect each connection upon installation of an individual friction lining (having effected disconnection of any old lining to be replaced) this may nevertheless represent a considerable time overhead in the work of friction lining replacement as in practice it requires not only the joining of conductive parts but also ensuring that any flexible connecting conductors (also known as flying leads) associated therewith are safely stowed from damage during subsequent vehicle operation. If large numbers are to be installed at any one time, the cumulative time penalty may be considerable.

In commercial vehicles brakes, where braking forces to be applied may be greater or applied over a larger area of friction lining, braking arrangements frequently employ fluid driven actuators disposed remotely of the friction lining itself and connected mechanically thereto by an actuator rod or equivalent, and in such circumstances condition sensing means may alternatively be provided to determine the extent of friction lining wear indirectly by responding to movement of the actuator rod or other mechanical element such as a travel adjuster. Although access to such mechanical element may be better than to a friction lining itself, or a plurality controlled by such element, it provides less accuracy and less comprehensive information by virtue of its sensing remoteness.

Notwithstanding the large variety of implementations of such arrangements for monitoring the condition of vehicle brake friction linings, most of the literature in this field is directed to road-going vehicles, and the arrangements therein are not directly applicable to rail-going, or railroad, vehicles in which a tractor locomotive either runs alone (as a self contained, powered vehicle) or with other sub-components, that is, trails a train of wagons, insofar as this relates to enabling reporting to the driving cab of the tractor locomotive.

Such freight trailer wagons tend to be primitive in terms of equipment and services such as electrical power and cabling buses able to link to each other for transferring data to a central processing and reporting unit on the tractor locomotive and/or, any particular vehicle sub-component and differing brake designs of, and quantity of, existing stock in use makes adaptation of existing designs of lining wear monitoring arrangements and retro-fitting thereof a costly and potentially time consuming exercise. Also, individual wagons are subjected to vastly different degrees of usage which places a further requirement of any equipment having to perform reliably notwithstanding long periods of inactivity, therefore making it difficult to justify not only costly solutions for individual wagons, but also any arrangement which requires frequent attention, so a solution proposed to incorporate the techniques of the prior art by building electric power and communication buses into freight trailer wagons during construction would not address the economic problem of providing it to the large number of such wagons already in use.

However, although such railroad trailer wagons do not appear suited to economic provision of brake friction lining condition reporting, departure from traditional techniques of reporting to the driving cab provides an opportunity for more economic solution. Clearly, if a brake condition exists which makes the vehicle dangerous then it is appropriate for the condition to be reported as a warning to the driver immediately during a journey. However, by sensing and report conditions which are of the nature of an early warning, corrective action may be taken by routine maintenance at a later time.

For vehicles which are the total responsibility of the driver and self contained, in terms of motive power, monitoring arrangements and power sources therefor, reporting even non-acute conditions to the driver may be appropriate. However in many instances maintenance of the individual brakes is not the responsibility of the driver but of a specialist department which effects maintenance, including replacement of worn friction linings, at times when the vehicle is not in use. In such circumstances reporting non-acute brake conditions to the driver's cab may be considered inappropriate, and particularly so when prior to said maintenance a vehicle sub-component (such as a trailer wagon) has been separated from the tractor or locomotive in which the driver's cab is situated.

Notwithstanding the economics of installing cabling and/or power sources on existing rolling stock for the purpose of reporting conditions sensed at the brakes of a vehicle the situation remains that at some stage operatives are involved in changing friction pads and the difficulty and skill required by virtue of including a condition sensing arrangement also has an economic impact, particularly if such changes are part of a retro-fit programme in which of friction pads for a variety of brake types have to be replaced in large numbers and condition reporting apparatus associated with each coupled to reporting arrangements.

Although there is a particular requirement for effecting a cost effective reporting of brake friction lining conditions for railroad freight wagons which are operated as sub-components of a vehicle, that is, as a train of them, reporting one or more predetermined conditions in brake friction linings is applicable to any vehicle or vehicle sub-component having any number of braked wheel axle sets, and in keeping with the generality of the foregoing it is an object of the present invention to provide, for a vehicle brake system, a friction lining condition reporting arrangement of simple form and more cost effective implementation than hitherto in respect of new and existing vehicles. It is also an object of the present invention to provide a vehicle brake system incorporating such a friction lining condition reporting arrangement. It is furthermore an object of the present invention to provide a friction pad incorporating friction lining condition sensing apparatus and for such condition reporting arrangement.

According to a first aspect of the present invention, a friction lining condition reporting arrangement for a vehicle brake system including at least one friction pad, comprising a friction lining and backing, and for each friction pad a holder arranged to operatively overlie the backing of a held friction pad and receive in a pad locating groove an upstanding mount of the backing, comprises condition sensing apparatus having an operational part arranged to be disposed in or adjacent a said friction lining and a conductive path connecting the operational part to at least one conductor termination accessible from externally of the friction lining, and coupling means operable to provide condition signals, representative of the state of the condition sensing apparatus, to signal processing means remote from the friction lining, is characterised in that the coupling means comprises coupling transmission means including a signal coupling member having at least one coupling contact, the signal coupling member being arranged to extend into a coupling cavity in the upstanding backing mount and therein effect conductive abutment between a said coupling contact and a said conductor termination and support the coupling transmission means with respect to the pad and holder.

According to a second aspect of the present invention, a vehicle brake system includes at least one friction pad, comprising a lining of friction material and a supportive backing therefor having an upstanding mount, and for each friction pad a holder operatively overlying the backing of the friction pad and having a pad locating groove to locate the pad with respect to the holder, and is characterised in that there is provided a friction lining condition reporting arrangement as defined in the preceding paragraph, and at least one coupling cavity is defined in the upstanding mount of the backing of the friction pad, the condition sensing apparatus has an operational part disposed in or adjacent a said friction lining and a conductive path connecting the operational part to at least one conductor termination within the coupling cavity accessible from externally thereof, and the coupling transmission means is supported by the signal coupling member extending into the coupling cavity to effect therein conductive abutment between at least one coupling contact of the signal coupling member and a said conductor termination of the condition sensing apparatus.

According to a third aspect of the present invention, a brake system friction pad, comprising a lining of friction material and a supportive backing therefor having an upstanding mount, suitable for a vehicle brake system including for said friction pad a holder arranged to operatively overlie the backing of a held friction pad and receive in a pad locating groove said upstanding mount of the backing, is characterised by a coupling cavity defined in the upstanding backing mount, and a friction lining condition reporting arrangement as defined in the two preceding paragraphs, in which the lining condition sensing apparatus has an operational part disposed in or adjacent the lining, and a conductive path connecting the operational part to at least one conductor termination extending into the coupling cavity and adapted for rubbing contact therein with at least one coupling contact of a signal coupling member.

Embodiments of the invention will now be described by way of example with reference to the accompanying drawings, in which
Figures 1 (a) and 1(b) are plan and sectional elevation views respectively through a rail vehicle at the level of a wheel axle set thereof, illustrating the provision of vehicle braking by way of a disc brake system incorporating substantially planar friction pads and, in block schematic, form a frictional lining condition reporting arrangement in accordance with the present invention, comprising coupling means in the form of coupling transmission means carried by the vehicle brake system and coupling reception means disposed remotely of the vehicle,
Figure 2(a) is a sectional elevation through a brake friction pad and holder of the vehicle of Figure 1(a), showing the friction pad in the form of a pair of complementary half-pads and the provision of condition sensing apparatus disposed with respect to each half-pad,
Figure 2(b) is a cross section though the brake friction pad and holder of Figure 2(a) in the direction 2b-2b thereof, and preferred disposition of condition sensing apparatus,
Figure 2(c) is a front view of the brake friction pad of Figure 2(a) in the direction 2c-2c thereof, further illustrating its structure as a pair of half-pads,
Figure 2(d) is a sectional elevation through coupling transmission means in accordance with the invention having a housing for the components thereof and a signal coupling member adapted to be disposed in a coupling cavity between the friction pad and holder to effect both signal contact with the condition sensing apparatus and support of the means with respect to the brake system,
Figure 2(e) is a side view of the coupling transmission means of Figure 2(d) illustrating conductive features of the signal coupling member to be disposed within the friction pad holder and detent means permitting retention in, and release from the holder,
Figure 3(a) is a sectional elevation through a second embodiment of rail vehicle wheel having a peripheral tread and a brake system therefor including a friction pad of arcuate block form for bearing on the tread, a holder for supporting an upstanding mount of the pad backing by way of a clamping pin and transmitting brake actuator forces and friction lining condition reporting arrangement in accordance with the present invention, in which the member of Figure 2(a) is contained within a coupling cavity defined by the upstanding mount and the clamping pin,
Figure 3(b) is a partly cut-away perspective view of the friction pad of Figure 3(a) illustrating the coupling member within the backing cavity and a clamping member in the form of a clip engageable with the clamping pin,
Figure 4(a) is a sectional elevation through a tread brake system of a third embodiment in which the friction lining condition reporting arrangement has coupling transmission means formed with the signal coupling member as a pad clamping pin,
Figure 4(b) is a cross section through the clamping pin of Figure 4(a),
Figure 5(a) is a fragmentary sectional elevation through an alternative form of the disc brake friction pad of Figure 2(b) in which the backing and its upstanding mount is formed of a modified friction lining material and the coupling cavity is defined wholly by a closed recess in the backing,
Figure 5(b) is a fragmentary sectional elevation through an alternative form of the tread brake friction pad of Figure 4(a) in which the backing and its upstanding mount is formed of a modified friction lining material and the coupling cavity is defined wholly by a closed recess in the backing,
Figures 6(a) is a sectional elevation through a tread brake system of a fifth embodiment in which the friction lining condition reporting arrangement has a coupling cavity defined within the friction lining and the coupling member is clamped and supported helped by a clamping pin,
Figure 6(b) is a sectional elevation through the brake system of Figure 6(a) in the direction 6b-6b,
Figure 7(a) is a sectional elevation through a tread brake system of a sixth embodiment in which the friction lining condition reporting arrangement has a coupling cavity defined within the friction lining material and conductor terminations therein which support a signal coupling member between themselves,
Figure 7(b) is a cross-sectional elevation of the brake system of Figure 7(a) in the direction 7b-7b,
Figure 8(a) is a schematic circuit representation of condition sensing apparatus associated with a brake friction lining, trackside processing means and coupling means for transfer of condition signals, including coupling transmission means and coupling reception means,
Figure 8(b) is a schematic circuit representation similar to that of Figure 8(a) but illustrating coupling of signals representing additional friction lining conditions,
Figure 8(c) is a schematic circuit representation similar to that of Figure 8(b) but including selection means comprising an energy emitter with the trackside coupling reception means and energy-responsive selection control means in the coupling transmission means,
Figure 8(d) is a schematic circuit representation similar to that of Figure 8(c) but wherein the energy-responsive selection control means comprises the power source of the coupling transmission means,
Figure 9 is a schematic representation of a train of vehicles including the vehicle of Figure 1(a) as a sub-component thereof, illustrating a plurality of wheel axle sets spaced in the direction of vehicle travel and brake-mounted coupling transmission means, and travel relative to trackside processing means as pre-processing means adjacent the coupling reception means and vehicle identification and reporting means remote from the pre-processing means, and
Figure 10 is a schematic block diagram of the identification and reporting means of Figure 9, showing also forwarding interface means.

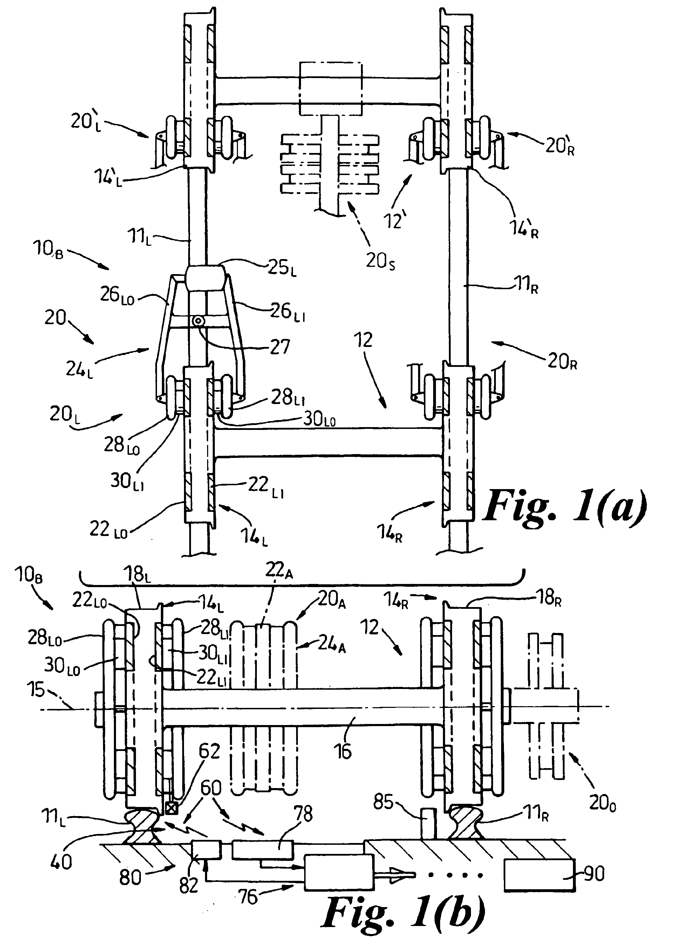

Referring to Figures 1(a) and 1(b), these show schematically cross sectional plan and cross sectional elevation views through a railroad vehicle 10_{B} mounted for travel along a path, or track, defined by a pair of rails 11_{L} and 11_{R}, by way of a plurality of flanged wheels grouped in pairs in a plurality of wheel axle sets 12, 12' that are spaced apart in the direction of travel, only one of which wheel axle sets, 12, being shown in any detail. Other, conventional components of suspension, springing, bearings and the like are omitted for clarity.

The wheel axle set 12 comprises a pair of flanged wheels 14_{L} and 14_{R} rotatable about a common axis 15, being coupled to, and spaced from, each other by an axle 16 such that peripheral tread regions 18_{L} and 18_{R} of the wheels run on the rails 11_{L} and 11_{R} respectively.

The vehicle has a braking system 20 which is generally replicated as individual brake parts for each wheel axle set, and often each wheel thereof.

The wheel 14_{L} has associated therewith a brake system part indicated generally at 20_{L} and referred to hereafter also as "brake". This is of disc brake form, comprising segmented disc rubbing surfaces 22_{LO} and 22_{LI} on outboard and inboard faces of the wheel respectively, and a calliper arrangement 24_{L} mounted adjacent the wheel. The calliper arrangement comprises an actuator 25, force transmitting arms 26_{LO} and 26_{LI}, arm pivot 27 and, at the end of the arms, holders 28_{LO}, 28_{LI} for friction pads 30_{LO}, 30_{LI} which are pivotally linked to the force transmitting means and disposed to overlie the respective wheel disc rubbing surfaces.

The wheel 14_{R} has associated therewith a corresponding brake system part 20_{R} (details not shown) which is operated in conjunction with brake 20_{L} to effect retardation of the axle set 12, and thus the vehicle. Likewise, the axle set 12' has wheels 14'_{L} and 14'_{R} which have associated therewith brake systems 20'_{L} and 20'_{R}.

Whilst reference is made to Figure 1 (b), it will also be appreciated that as the wheels are fixed with respect to axle 16, a brake system may be formed as an axle brake spaced inboard of the wheels as , shown ghosted at 20_{A}, and corresponding to the arrangement 24_{L} described above, spaced outboard of the wheels as shown ghosted at 20_{O}, or on a separate braking or drive shaft linked to one or more axles by gearing, as shown ghosted at 20_{S}.

Insofar as wheel 14_{L}, brake system 20_{L} and friction pad 30_{LI} and holder 28_{LI} thereof are typical of those in other locations, detail description will be confined thereto for clarity. Notwithstanding the differences, they are each associated by function and proximity with a wheel axle set and the following description is intended to be construed without positional limitation.

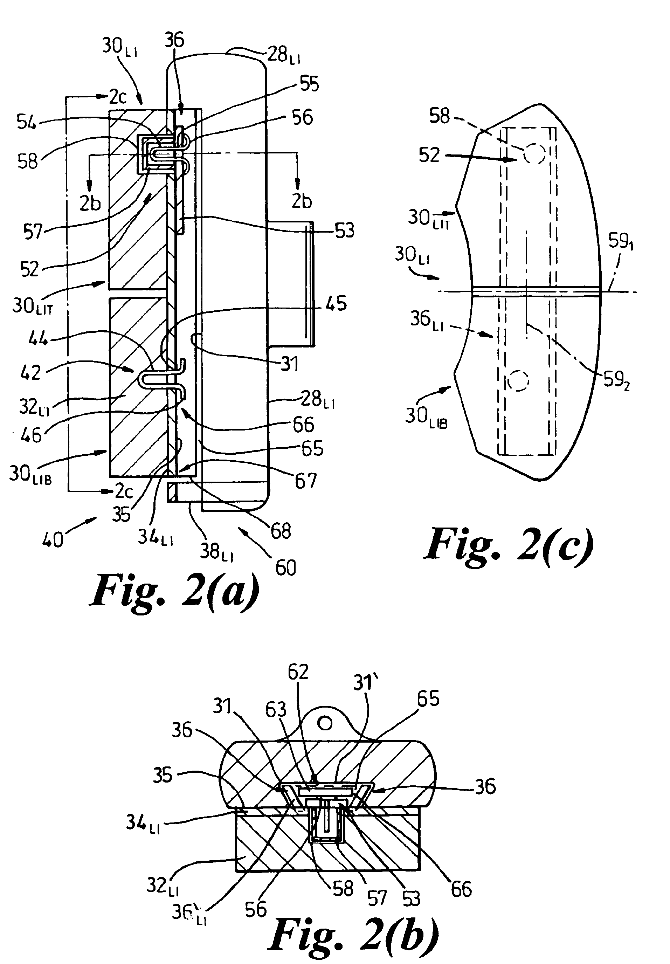

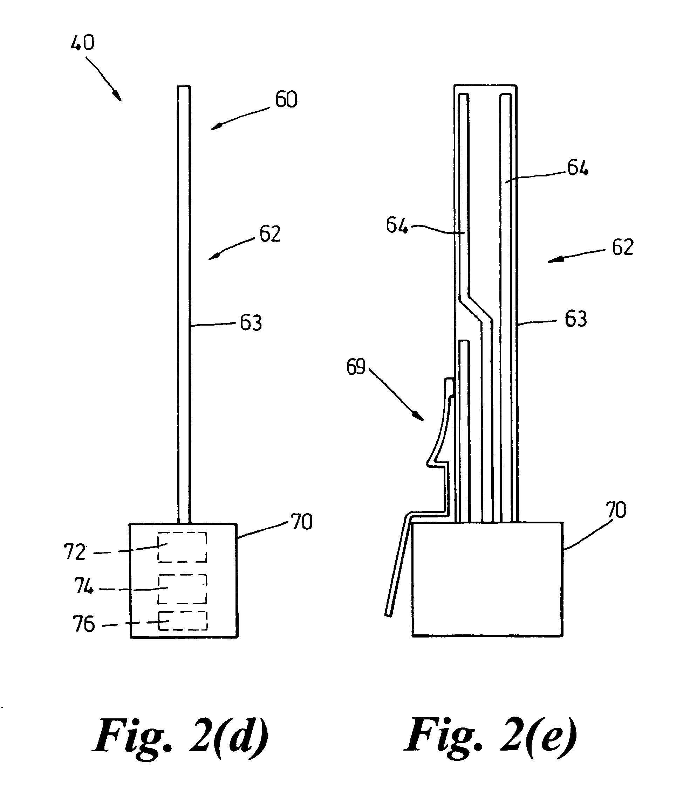

The friction pad 30_{LI} comprises a body of friction material, herein referred to as the friction lining, carried by a backing of metal or the friction material itself, by which the pad is located and held in the holder. Although many structural forms of disc brake systems have been employed in the past, modern rail vehicles have brake friction pads and holders which at least in Europe conform to a UIC standard design, governed by document UIC-541-3, that facilitates fitting and interchangeability. Such a design of disc brake system is shown in greater detail in Figures 2(a) to 2(c), and employs a holder 28_{LI} having a rectilinearly extending locating groove 31_{LI} of dovetail cross-section, and friction pad 30_{LI} comprising a friction lining 32_{LI} and backing 34_{LI}. The backing 34_{LI} has a mounting surface 35_{LI} formed with a rectilinearly extending, upstanding mount 36_{LI} of co-operating dovetail cross-section, whereby the pad can be slidably located in the groove and retained by a clamping member, such as retaining clip 38_{LI}, or other means. The pad mount 36_{LI} may be formed from a metal backing 34_{LI} that has a thickness variation or upturned flanges 36'_{LI} and/or may comprise a body of the friction material itself or a composite thereof. It is also commonplace for a friction pad associated with any one holder to be manufactured as a pair of complementary-shaped half-pads that may be inserted into a holder separately to provide a friction lining that conforms in shape to a segment of the disc rubbing surface. In this specification reference to a "fiction pad" should, in respect of structure, be taken to include reference to a half-pad and, in respect of mounting and operation, to include a pair of half-pads, unless specifically stated otherwise. In Figures 2(a) to 2(c) brake pad 30_{LI} conveniently comprises complementary half-pads which are mounted in the holder generally one above the other, 30_{LIT} being the top pad and 30_{LIB} being the bottom pad.

In accordance with the present invention at least one vehicle brake, such as the brake system 20_{L}, is monitored for existence of a predetermined condition in the friction lining, in particular wear of the friction lining to a predetermined remaining thickness, by provision of a friction lining condition reporting arrangement indicated generally at 40.

In the half pad 30_{LIB} there is disposed condition sensing apparatus 42 having an operational part 44, comprising an electrical conductor, embedded in the friction material 32_{LI} and connected by conductive path 45 to exposed conductor terminations 46 extending proud of the backing mounting surface 35_{LI} , that is, upstanding with respect to the surface of the backing. The embedded conductor 44 is in the form of a so-called abradable loop which extends probe-like from the backing into the body of the lining for a distance representing a wear limit for the friction lining and is the first part of the conductor to be abraded by the wheel disc rubbing surface 22_{LI}, when the overlying friction material has been worn away through use. Put another way, the conductor 44 normally exhibits an electrically transmissive state between the terminations but such state is changed to be non-transmissive by existence of a predetermined condition of lining wear.

In the half pad 30_{LIT} condition sensing apparatus 52 is shown comprising a carrier 53 for a probe-like operational part 54, a conductive path 55 and conductor terminations 56. The conductive path extends through the carrier, said operational part and conductor terminations being on opposite sides thereof. The carrier is formed of electrically insulating material and also comprises a housing 57 for the operational part and conductive part, which housing is disposed extending into an aperture 58 formed into the friction material from the pad backing so that the conductor terminations extend away from the backing. The carrier may have the same dimensions as the aperture 58, and effectively a plug therefor, or may have larger dimensions, as illustrated, and overlie the backing surface about the aperture. The housing 58 and the conductor 54 are abradable by the wheel disc rubbing surface when the overlying friction material has been worn away through use and, as for the sensing apparatus 42, the conductor 54 normally exhibits an electrically transmissive state between the conductor terminations but such state is changed to be non-transmissive by existence of a predetermined condition of lining wear.

Although each half-pad is shown incorporating alternative forms of condition sensing apparatus by way of illustration, sensing apparatus of the same form may be provided in each half-pad or apparatus of either form may be provided in one half-pad only of such a pair, being able to respond to a wear level to which the lining of the friction pad as a whole is uniformly subjected, as well as in a unitary, full size pad.

Instead of the or each condition sensing apparatus having an operational part comprising a probe-like wear loop that is confined to a relatively small region of friction lining, it may comprise a plurality of such probe-like loop forms at spaced regions of the pad and joined in series by a conductive path closer to the backing, or may comprise such a conductive path within or surrounding the friction lining at substantially constant distance from the backing that effects a distributed wear loop.

As may be seen from reference to Figure 1(b) and Figure 2(c), the holder 28_{LI} in this embodiment is mounted with respect to the operating arm 26_{LI} to permit the holder and planar friction pad effected by, half pads 30_{LIT} and 30_{LIB}, to align with the brake disc surface for transmitting brake actuation forces by pivoting about orthogonal tilt axes 59₁ and 59₂. Insofar as it is possible for such pivotal mount to stick, it is preferred that an effective plurality of operational parts are distributed on opposite sides of one or both tilt axes to ensure that at least one of them is predisposed to early abrasion with an associated part of the friction lining in event of such sticking.

Condition sensing apparatus which has an operational part comprising plurality of discretely connected conductor loops in the or each friction lining permits sensing of secondary conditions such as wear reaching different levels in the friction lining that is indicative of wear rate, or response to wear to the same depth occurring at significantly different times in different regions of the pad that is indicative of uneven wear.

It will be appreciated that condition sensing apparatus may also be arranged to respond to a predetermined condition other than lining wear and/or to predetermined secondary conditions occurring thereafter which may usefully indicate consequential or rate effects. Each operational part of the condition sensing apparatus may include, instead of or in series with a conductor that can be disrupted by abrasion due to wear, thermally responsive means that has an analogous effect when exposed to undesirable heating, such as a fusible conductor link, a thermally responsive switch or a temperature transducer responsive to at least one temperature threshold to provide a conduction level related to temperature and possibly being responsive to a change in conduction level each time the temperature crosses a said threshold.

The operational part of the condition sensing apparatus, whether a conductive loop or otherwise, may be disposed at or beyond the normal limits of friction lining wear, such as in the backing or an underlayer disposed between the backing and normal friction material.

Each of the above described condition sensing apparatus 42 and 52 is passive, insofar as each defines a transmission state by way of a level of electrical conduction in a conductor, but it is possible to employ sensing apparatus in which a transmission state is the active production, or cessation of production, of a more complex or characteristic signal when a predetermined condition exists.

Likewise, it is possible to use or adapt condition sensing apparatus employing conductors which conduct other than electric current, such as optical fibres, but which nevertheless exhibit transmissive and non-transmissive states, or closed pressurised fluid pipes.

The condition reporting arrangement comprises, in addition to the condition sensing apparatus associated with the brake friction pad, coupling means, indicated generally at 60, which is arranged to couple condition signals that are characteristic of the conductive state of the operational part of the condition sensing apparatus to processing means remote from the friction lining. For clarity of description the coupling means 60 is described mainly for the normally transmissive condition sensing apparatus 52 that responds to a conduction interrupting condition, but may be used with the condition sensing apparatus 42 and, with or without adaptation, other forms of condition sensing apparatus some of which adaptations are described hereinafter.

The coupling means 60 comprises coupling transmission means 62 adapted to be supported by the friction pad 30_{LI} and in this case the holder 28_{LI}. Referring also to Figures 2(d) and 2(e), the coupling transmission means 62 comprises a signal coupling member 63 having a plurality of coupling contacts 64 thereon, the member being arranged to extend into a coupling cavity 65 and therein effect conductive abutment between the coupling contacts 64 and conductor terminations 56 (and/or 46) of the condition sensing apparatus.

The coupling cavity 65 is defined at an interface between the holder and friction pad backing through which brake actuation forces are not transmitted, being actually formed in the upstanding mount 36_{LI} of the backing mounting surface 35_{LI} as a backing recess 66 open in a direction away from the friction lining, that is, towards the surface part 31' of the holder groove 31, so that the holder defines a boundary of the coupling cavity.

The carrier 53 and conductor terminations associated with the condition sensing apparatus are disposed in this backing recess 66 with the conductor terminations upstanding away from the backing towards the surface 31' of the holder.

The coupling cavity extends along the holder groove in the direction parallel to the direction that frictional forces are exerted by the brake system, that is, parallel to the direction in which the associated braked wheel turns, and defines a mouth 67 at a boundary 68 of the friction pad which the holder does not overlie. Subject to the conductor terminations as discussed below, the signal coupling member 63 of the condition transmission means is suitably dimensioned to slide in the coupling cavity with a clearance fit by way of the mouth whilst the friction pad is held by the holder 28_{LI} , with a part of the signal coupling member extending from the cavity substantially in the plane of the backing. Conveniently the mouth of the coupling cavity is at the lower end of the friction pad and the signal coupling member 63 is releasably held therein by detent 69 latchable with respect to the holder or pad clamping member 38_{LI} permitting its subsequent removal.

Alternatively, the coupling cavity mouth 67 may be of reduced thickness in comparison with that part of the signal coupling member arranged to be disposed fully within the coupling cavity, thereby requiring the signal coupling member and friction pad to slide into the holder together, but also providing retention of the signal coupling member by retention of the friction pad.

The signal coupling member 63 comprises a substantially rigid electrical circuit board on the surface of which are carried substantially planar coupling contacts 64, disposed according to the number and disposition of conductor terminations, and the board is dimensioned to have a thickness greater than the coupling cavity 65 between the upstanding conductor terminations 56 and the holder so that the conductor terminations are deformed or deflected by the inserted coupling member which effects conductive abutment between the coupling contacts and the conductor terminations, notwithstanding variations in clearance between the friction pad and holder.

Preferably, the upstanding conductor terminations 56 are arranged to deform resiliently in a direction substantially transversely to the direction in which the signal coupling member slides into the coupling cavity by way of the mouth, that is, they exert a bias on the member tending to displace it away from the friction pad until inhibited by engagement with the holder, as a boundary wall of the coupling cavity, whilst the terminations are still deflected. Deflection of the conductor terminations thus ensures that they are biassed into the conductive surface-to-surface abutment with the coupling contacts. Furthermore, inserting the signal coupling member in a direction substantially transversely to the direction of termination deflection causes the coupling contacts 64 thereof to rub against the conductor terminations and thereby effect a cleaning as they adapt to the operative surface-to-surface abutment. It will be appreciated that as an alternative to upstanding conductor terminations, the coupling contacts 64 may be formed upstanding with respect to the signal coupling member board 63. Furthermore, both coupling contacts and conductor terminations may be resilient to lessen the possibility or poor signal transmission if one of the abutting pair relaxes.

It will be appreciated that instead of the conductor terminations exerting a bias force on the signal coupling member transversely to its sliding direction within the coupling cavity, they may be caused to exert such bias force along the direction of slide, tending to expel the signal coupling member from the cavity unless it is inhibited by the detent 69 and clamping member or holder.

Likewise, it will be appreciated that the signal coupling member may be supported in the coupling cavity 65 by a plurality of oppositely disposed conductor terminations 56, that is , clamped between them as they exert bias on opposite sides thereof in effecting surface-to-surface abutment rather than biassing the member against a wall of the cavity.

It will be seen furthermore that the signal coupling member 63 may have coupling contacts 64 arranged to abut conductor terminations associated with different operational parts of condition sensing apparatus or different condition sensing apparatus. Also the conductor terminations may be directly extending from the backing, such as those 44, rather than a carrier.

As the signal coupling member is supported with respect to the friction pad and holder by way of the coupling cavity, the coupling transmission means as a whole is supported by the signal coupling member. The coupling transmission means further comprises, mounted on the signal coupling member contact board 63 at an end region thereof arranged to extend away from the coupling cavity, a cover 70 containing or encapsulating components for turning the conductive state of the condition sensing apparatus into condition signals and presenting them to the remote processing means.

Such presentation may be by way of a physical link to a remotely disposed receiver of such transmissions that interfaces with the processing means or by so-called "wireless transmission", which is used in this specification to mean transmission through the atmosphere without such physical link, notwithstanding the form of transmitter. That is, it is intended that wireless transmission may be by way of electromagnetic radiation at radio or higher frequencies, or by pressure variations as pneumatic or sound signals. preferably, but not essentially, by way of high frequency transmission to a receiver of such transmissions that interfaces with the remotely disposed processing means. Physical links may be employed additionally to transmit signals as electrical or liquid pressure variations, as well as the above forms. However, the use of wireless transmission not only eases constraints on the relative positioning of the remote processing means but also disposition of the signal coupling member with respect to the brake system.

In this embodiment the signal coupling means comprises, within the cover 70, a condition transmitter 72, a power source 73 and condition control means 74. As the signal coupling member board 63 is extends away from the friction pad and holder in a downward direction substantially in the plane of the wheel, the separation between cover 70 and the coupling cavity is chosen to effect a degree of both physical and thermal isolation.

The condition transmitter emits electromagnetic radiation at a suitable frequency, but preferably as radio frequency radiation in the 418MHz band or in an equivalent band permitted by regulatory authorities in any locality of operation.

Furthermore, the processing means, indicated at 76 in Figure 1(b), is disposed remotely of the vehicle itself and the coupling means 60 comprises also complementary coupling reception means 78 disposed with the remote processing means 76 between the rails 11_{L} and 11_{R} at track level and what may be conveniently referred to as trackside. It will be appreciated that such reception means, particularly of radio frequency transmissions, may be disposed other than between the rails, such as alongside the track or overhead, and the term "trackside" is used herein as including such options. Condition signals received by the trackside coupling reception means are passed to the processing means for processing, or for pre-processing and forwarding to more remote identification means for fully utilising the information of the condition signals, and reporting existence of a predetermined condition in any convenient manner, one or more being as described below.

However, before discussion of the operation of the coupling transmission means, coupling reception means and processing means, it is appropriate to consider different embodiments of condition sensing apparatus and coupling transmission means for different structural forms of vehicle brake.

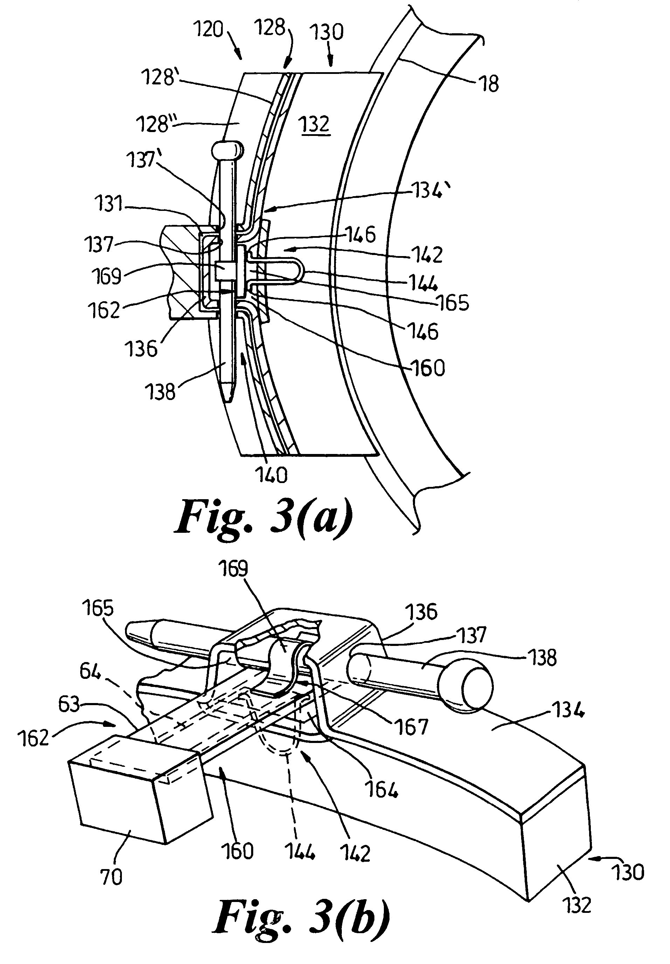

Referring to Figure 3(a) this shows in schematic form a sectional elevation through a second form of brake system 120 of the so called tread-type employed with a railroad vehicle and associated with a wheel braking surface comprising the rail-borne tread as shown at 18_{L} and 18_{R} in Figure 1(b). The brake system 120 comprises, in addition to an actuator and force transmitting arm (not shown), a friction pad holder 128 in which is located and held a friction pad 130. The friction pad comprises an arcuate, tread - conforming friction lining 132 and similarly-shaped (or alternatively flat) backing of metal, being in this form also known as a brake block. Friction pads of such block form for tread brakes are covered by document UIC-541-4, although many other, non-UIC compliant forms exist

The holder 128 transmits brake actuation forces into the lining by way of overlying floor plate 128' given rigidity by at least one side plate 128". The friction pad is located with respect to the holder by way of a locating groove 131 in the holder into which extends a correspondingly shaped upstanding mount 136 formed as a loop of the metal backing 134, a clamping member 138, in the form of a tapered retaining pin, which extends through aligned holes 137 and 137' in the mount loop 136 and the holder respectively in a direction parallel to the direction that frictional forces are exerted by the brake system, that is, parallel to the direction in which the associated braked wheel turns.

In accordance with the present invention a friction lining condition reporting arrangement 140 comprises condition sensing apparatus 142 corresponding to the apparatus 42 described above, in the form of an operative part 144 that is an abradable conductor loop embedded within the friction lining and connected to conductor terminations 146 extending through the backing 134.

Referring also to Figure 3(b) and the perspective view of the friction pad 130 therein, a coupling cavity 165 is formed in the mount loop 136 of the backing, between the conductor terminations 146 and clamping pin 138, being open in a direction away from the friction lining and extending to a mouth 167 at the boundary of the pad mount 168. The conductor terminations 146 extend into the coupling cavity and are resiliently upstanding.

Coupling means, indicated generally at 160, comprises coupling transmission means 162 which is substantially the same as the coupling transmission means 62 described above and will therefore not be described in detail, like parts being given the same reference numbers. It comprises a signal coupling member 63, one end of which is dimensioned for siding into the coupling cavity by way of the mouth 167 and carries coupling conductors 64 for effecting biassed conductive abutment with the conductor terminations 146, and the other end of which carries the above-mentioned condition transmitter, power source and condition control means within cover 70. Insofar as the pin is an extension of the holder for the purposes of holding the pad in place, it may be considered as comprising a holder part inhibiting displacement of the biassed signal coupling member. The signal coupling member is also provided with detent clip 169 for holding it with respect to the coupling cavity 165, and the coupling transmission means is therefore supported with respect to the friction pad and holder by way of the signal coupling member.

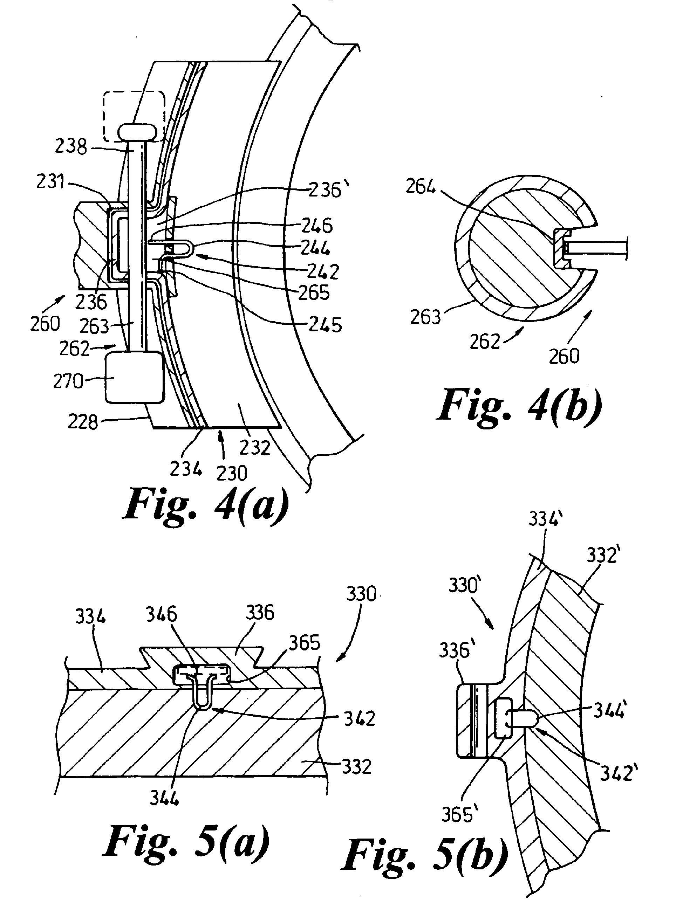

Referring to Figure 4(a) this shows schematically a third form of railroad vehicle brake system 220 which is similar to the system 120 in that it comprises an arcuate friction pad holder 228 with pad locating groove 231, friction pad 230 consisting of friction lining 232 and backing 234 with upstanding mount loop 236, and clamping member in the form of a retaining pin 238 which extends through alignable holes 237 and 237' in the mount loop 236 and holder respectively and crosses a pin cavity 236' in the mount loop.

In accordance with the invention friction pad 230 contains a condition reporting arrangement 240 comprising condition sensing apparatus 242 having an operational part 244 embedded within the friction lining 232 and connected at one end 245 to the metal of the mount loop 236 and at the other end to a conductor termination 246 extending into the pin cavity 236' within the mount loop that defines a coupling cavity, being resiliently upstanding so that it can be deflected by, and therefore exert lateral bias on, a retaining pin passed through the aligned holes 237 and 237' in the pad backing and holder.

Referring also to Figure 4(b), coupling means, indicated generally at 260, comprises coupling transmission means 262 including the above mentioned condition transmitter, power source and condition control means mounted within a cover 270 on signal coupling member 263 by way of which the means is supported by the holder and friction pad.

The signal coupling member 263 is formed with cross-sectional dimension corresponding to a retaining pin clamping member of the brake system and provides a substitute therefor. The backing mount pin cavity 236' containing the conductor termination 246 defines a coupling cavity 265 into which the signal coupling member can slide by way of a mouth 267 defined by the pad retaining holes 237. The signal coupling member has a conductive metallic body 263' of sufficient strength to function as the retaining pin and operatively extends through, and aligns, the holes 237 and 237' in the holder and pad backing loop, effecting both pad retention and electrical contact with the condition sensing apparatus at 245, as well as crossing the coupling cavity 265. The signal coupling member body 263' has at a part of its periphery operatively exposed to the coupling cavity an electrically isolated coupling contact 264 which bears on, resiliently deflects and is subject to biassed conductive abutment with, the conductor termination 246.

Conveniently, the signal coupling member body 263' is defined as a hollow shell which substantially surrounds, and permits electrical isolation of, the coupling contact 264. Of course, if appropriate, the pin may carry more than one coupling contact.

It will be appreciated that insofar as the signal coupling member 263 is a functional substitute for a tapered retaining pin, it may be necessary to subject it to impacts to property locate or release it from the holder. The control and transmission components contained within cover 270 at the end of the pin/member may be removably attached to the pin to facilitate pin location or removal without subjecting them to risk of damage. Furthermore such separable attachment may permit an optional disposition of condition transmitter below the holder whilst a pin head permits it to be inserted from above the holder.

Referring to Figures 5(a) and 5(b) which show schematically modifications to the above described disc pad and tread block forms, in Figure 5(a) a substantially planar disc brake pad 330 corresponding to the pad 30_{LIB} is formed integrally with the operative friction lining 332 from a friction material defined by a cured thermosetting resin binder but modified as to its strength and thermal properties. The backing 434 nevertheless includes an integrally moulded upstanding mount 336. The backing contains at least partly within the mount a coupling cavity 365 into which extend conductor terminations 346 of condition sensing means 342 moulded into the materials of the pad. The cavity corresponds to cavity 65 except that it is defined wholly within the pad and not by an overlying holder (although it may be if desired) and a signal coupling member, such as 63, extends into the cavity by way of mount 367 at the end of the mount and is biassed against the boundary wall of the cavity as defined by the backing material.

Referring to Figure 5(b) this shows a similar construction for a pad 330' in the form of a tread block, wherein the integral backing 334' of friction material has an upstanding mount 336' and a coupling cavity 365' wholly contained within the friction material of the backing and possibly the lining 332' proper.

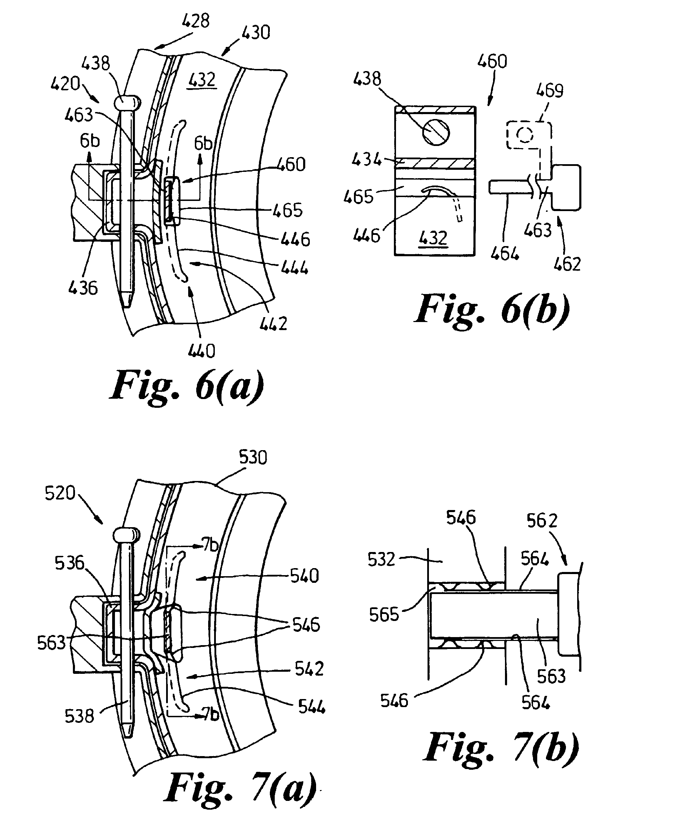

Referring now to Figures 6(a) and 6(b) which show schematically part of a fifth form of railroad vehicle brake system 420 which is similar to that described above at 120 in comprising an arcuate tread-type friction pad 430 supported by an arcuate holder 428 and retained therein by clamping member pin 438.

Condition sensing apparatus 442 has an operational part 444 embedded within the friction lining 432 as a pair of spaced apart abradable conductor loops 444₁ and 444₂ connected in series by a conductive path that terminates at resilient conductor terminations 446. Coupling means in accordance with the present invention, indicated generally at 460, comprises coupling transmission means 462 corresponding to the means 62 described above and having a signal coupling member 463 extending into a coupling cavity 465 defined within the friction lining spaced from the pad backing 434, as shown, or (not shown) having one side wall formed by the pad backing. The coupling cavity extends transversely of the pad length to at least one mouth 467 at a side wall of the lining and into which can slide the signal coupling member carrying coupling contacts 464 and other components of the coupling transmission means, thereby supporting the coupling transmission means with respect to the friction pad. The signal coupling member is conveniently retained within the coupling cavity by a bracket, such as schematically indicated ghosted at 469, which extends into the cavity formed within the backing mount loop and is retained by pad clamping member pin 438.

The thickness of the signal coupling member and coupling cavity are chosen such that insertion of the member effects resilient deformation of the conductor terminations which then bias the member towards the side wall of the coupling cavity, whereupon it is inhibited from further displacement and causes the conductor terminations to effect a biassed conductive abutment with the coupling contacts 464.

Referring to Figures 7(a) and 7(b), these show schematically in sectional and cross sectional elevations respectively part of a sixth form of railroad vehicle brake system 520 which is similar to that described above at 420 insofar as a friction pad 530 has therein condition sensing apparatus 542 with resilient conductor terminations 546 extending into a coupling cavity 565 defined in the friction lining for sliding insertion of a signal coupling member 563 of coupling transmission means 562.

The conductor terminations are disposed spaced apart at opposite sides of the coupling cavity and the signal coupling member 563 has coupling contacts 564 disposed in opposite sides thereof such that as the member is inserted into the coupling cavity by way of a mouth it deflects apart the opposing conductor terminations such that they exert a bias on the signal coupling member that both effects conductive abutment with the coupling contacts 564 and centres the coupling member with respect to the cavity; that is, the signal coupling member is supported in the coupling cavity by the conductor terminations rather than by a cavity boundary wall. This form of clamping member support may be applied to other pads of disc brake or tread brake form, such as the pads 30_{LI}, 430 and 430'.

It will be appreciated that the coupling transmission means in all of these further embodiments may convey condition signals from the vicinity of the signal coupling member to coupling reception means remotely of the friction lining and holder in the same manner as outlined above for coupling means 40.

The above variants of brake system, condition sensing apparatus and coupling means have been described in order to demonstrate a number of variations thereof which may be effected both dependently on, and independently of, the precise structure of the brake system. However, they serve to demonstrate that a vehicle brake system of well known form can be readily adapted to include a friction lining condition reporting arrangement without structural changes of any substance except to the friction pad which is nevertheless a replaceable consumable item, and possibly a pad clamping member. The condition reporting arrangement is suited to retro-fitting within existing brake systems upon replacement of the appropriate friction pad, such fitting in effect comprising disposing the signal coupling member in the coupling cavity and latching the member or other part of the coupling transmission means with respect to the holder and/or friction pad.

Although the embodiments described with reference to the component parts of Figures 3 to 7 have been in respect of wheel tread friction pad of block-type with an embedded condition sensing apparatus in the form of a simple abradable conductor, in all of them the operational part of the condition sensing apparatus may additionally comprise a thermally responsive means and/or one or more abradable conductors spaced about the friction lining, and in particular displaced from a tilt axis of the pad and/or disposed with different relationship to the friction lining material and/or backing as outlined above. It will also be appreciated that in the embodiments of Figures 3 and 5 the condition sensing apparatus may correspond to the structure shown at 52 with separate carrier and aperture in the friction material, whilst the disc brake embodiment of Figures 2 may comprise a coupling cavity defined in the friction lining and/or support the signal coupling member 63 in the manner shown in Figures 6 and 7.

Insofar as each of the above described structural embodiments employ condition sensing apparatus having an operational part that includes interruption of electrical conduction and condition transmission means employing common components, operation may be considered the same for all of them but will be described principally with respect to the embodiment of Figures 1 (b) and 2(a) to 2(e).

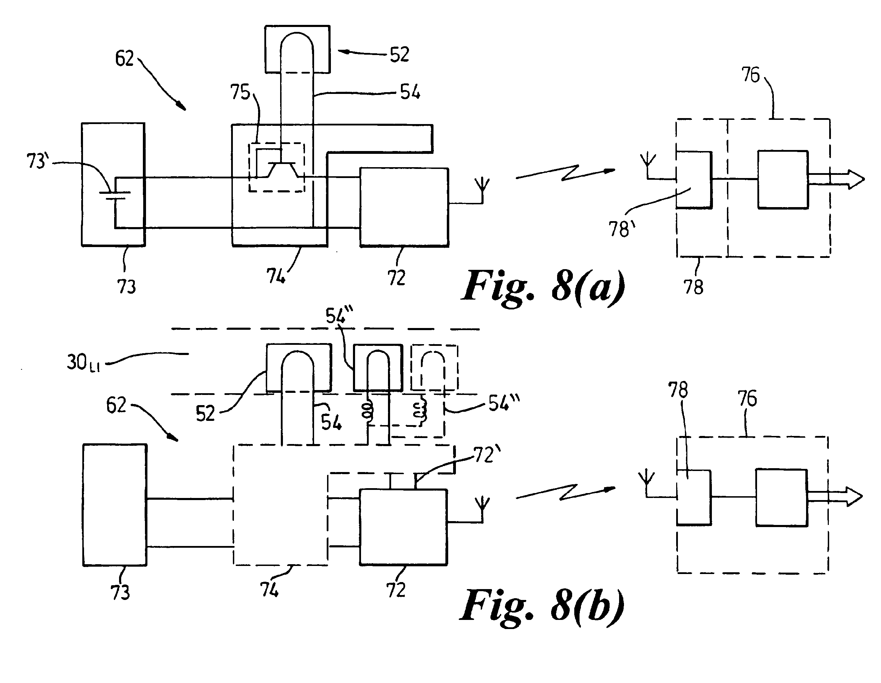

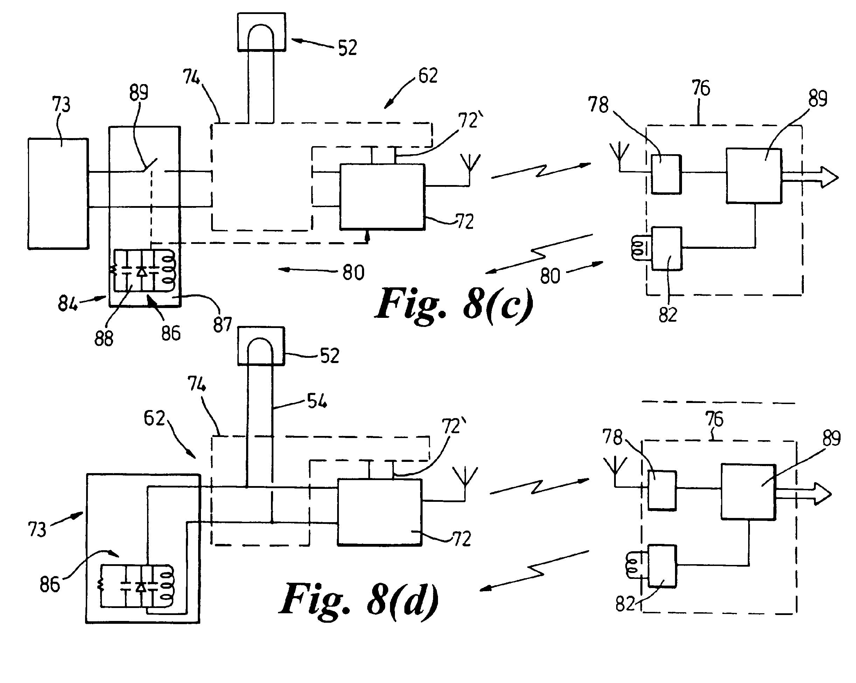

Referring now to Figures 8(a) to 8(d), these illustrate in schematic circuit form the condition sensing apparatus 52, substantially as described above, but also with variants thereof as described, and various embodiments of coupling means.

Referring to Figure 8(a), in its simplest form the coupling transmission means 62 has power source 73 provided by a battery 73' which is connected to the condition transmitter 72 by way of condition control means 74. The battery may be a replaceable dry-cell or a chargeable cell, arrange to be kept charged by, for example an individual turbine driven by vehicle motion. The condition control means includes a low drain semiconductor switch 75 in series with the source and transmitter to interrupt power whilst the conductive path of the condition sensing apparatus is complete between its terminations, that is, in its transmissive state, but to connect them when the conductive path of condition sensing apparatus is interrupted. The transmitter is arranged to simply oscillate and emit radiation at the prescribed frequency when empowered by source 73, that is, transmit a condition signal comprising unmodulated radiation therefrom, which the condition control means enables it to do. The coupling reception means 78 responds to reception of such radio frequency transmission to provide a received signal of suitable form for the processing means 76 that is, by virtue of its existence, indicative of the condition existing within the friction lining. How each received signal is further processed and interpreted for reporting is described hereinafter, following discussion of alternative forms which the condition sensing apparatus, coupling means and condition signals may take.

The condition transmitter 72 may be arranged to transmit a radio frequency signal that is modulated in amplitude, phase or frequency, possibly as a digitally interpretable code, that is demodulated or interpreted in the coupling reception or processing means in order to convey more information. It will be appreciated that the condition signal may take such modulated form as the initial form of transmission resulting from the condition sensing apparatus first identifying the existence of a predetermined condition and/or as a result of subsequently sensing a secondary predetermined condition as outlined above.

An exemplary arrangement is schematically illustrated in Figure 8(b) which shows the condition sensing means 52 in a form having a second conductor loop 54' disposed within friction lining 30_{LI} at different depth from the backing than the conductor loop 54. The conductor loops are connected to the condition control means 74, conductor loop 54 being connected to the power enabling switch 75 and the loop 54' being connected to a modulation control 72' of the condition transmitter 72. Thus in operation, prior to the existence of wear that results in disruption of conductor 54 there is no transmission; upon existence of the wear condition sensed by disruption of conductor loop 54 the transmitter 73 is empowered and transmits with zero or first modulation. When subsequent wear disrupts conductor loop 54' the modulation is changed and the condition signal is therefore characteristic of this secondary predetermined condition. More secondary - condition conductor loops may be employed, as illustrated at 54", if each forms part of the modulation control such that as and when each conductor loop is disrupted the transmitter signal modulation is characteristically changed. Such conductor loops may be within tuned circuits that control the frequency or amplitude of analog transmissions or provide jumpers that effect definition of a digital code which is changed by each disruption, and thereby the condition signal modulation. As mentioned above, such detection of condition signals at different levels may be related to derive a measure of wear rate, but analogously, a plurality of such conductor loops at the same depth but arrayed spatially about the friction pad may provide detection of condition signals at different times that derive a measure of wear uniformity.

It may also be useful to confine coupling between the trackside coupling reception means and coupling transmission means by enabling transmission only when the condition transmitter and/or the coupling reception means are suitably juxtaposed spatially (by transmission and/or reception envelope) and/or temporally, particularly when there is relative motion between the vehicle and trackside coupling reception means.

Referring to Figure 8(c), the coupling means may include selection means, indicated generally at 80, which is responsive to an instantaneous positional relationship between the trackside coupling reception means 78 and the coupling transmission means 72 to enable condition signal transmission. The selection means 80 comprises a trackside emitter 82 of electromagnetic energy in the 125 KHz radio frequency band and, in the coupling transmission means, selection control means 84 which is operable to control supply of power to the condition transmitter for a period limited by the duration of reception of said energy.

In Figure 8(c) the selection control means 84 comprises energy receiving means 86 incorporating a tuned circuit 87 and rectification means 88, responsive to the emitted energy to produce a d.c. (or other desired) signal, and also an electric switch 89 responsive to the signal to close and connect the power source 66 to the condition control means 74. The condition control means 74 is connected to the condition sensing apparatus 52 and switched in accordance with the conductive state thereof, whereby only if the selection control switch is closed whilst a predetermined friction lining condition exists can the transmitter send a condition signal.

Such selection means 80 is thus capable of prolonging the operating life of a battery power source, but it will be appreciated that the selection control means 84 may function within the coupling control means for other purposes. The enabling energy received at the selection control means may (notwithstanding rectification) set the condition transmitter 72 to transmit condition signals in a form wherein the state of the condition sensing apparatus changes the nature of the condition signal rather than its presence or absence per se. For example, the selection control means 84 may be the principal control in terms of enabling the condition transmitter 72 to transmit radiation and the condition control apparatus 52 be coupled to a modulation control 72' of the transmitter. By such configuration, the condition transmitter may emit a 'confirmation' signal when the coupling transmission means is disposed correctly with respect to the energy emitter/coupling receiver means that indicates that it is able to transmit a condition signal correctly should a predetermined condition exist, or put another way, that it is not faulty. Conveniently, the form of such confirmation signal is dependent upon the transmission state of the condition sensing apparatus such that the confirmation signal also confirms the status of the condition sensing apparatus and becomes a condition signal when a predetermined condition exists.

Insofar as the selection control means 84 utilises energy emitted from the trackside selection means, it may serve to boost the charge of the battery power source 73 if it receives such selection energy frequently. However, as such energy reception coincides substantially with the requirement for transmission, it may also comprise the power source of the coupling transmission means and, if appropriate, of forms of powered condition sensing apparatus not detailed herein. This form of power source may comprise a direct substitution for the battery in any of the above describes variants, but a further arrangement is illustrated in Figure 8(d). The energy receiving means 86 comprises the sole power source 73 and is coupled to the supply to the condition transmitter 72 by way of the condition control means 67 which connects the normally conductive path of the condition sensing apparatus 52, that is, conductor 54, as a shunt across the power source, thereby preventing the condition transmitter 72 from functioning until such time as a predetermined condition exists in the friction lining, interrupting the conduction path and removing the shunt.

It will be appreciated that although the condition transmitter and condition reception means are paired, it may also be appropriate to pair the energy emitter 82 and selection control means 85 of the selection means 80 by choice of frequency or modulation of the energy signal. Such a facility may be useful if the condition transmitter is capable of transmitting on a number of channels or different modulation codes; the energy emitter, insofar as it is disposed in the trackside vicinity of the condition reception means, may signal to the condition transmitter which channel or modulation to use in coupling with the coupling reception means.

Such an arrangement of condition sensing means and coupling transmission means which requires no on-vehicle power source is particularly suitable for use with vehicles having no power source or vehicle sub-components, that is, trailer wagons as discussed above, which are often decoupled from powered parts of vehicles and expected to go for long periods without need for brake friction lining maintenance, and furthermore suitable for retro-fitting to existing vehicles without major modifications thereto. The forms of condition sensing apparatus and coupling transmission means described above may readily be incorporated in newly manufactured brake pads or assembled with respect to replacement pads provided only with suitable apertures and a coupling cavity in the mount. Friction pads equipped with such condition sensing apparatus may be employed absent coupling transmission means in existing holders of non-monitored brakes without modification thereto, and any brake of the various types outlined above should be capable of being monitored, insofar as the coupling transmission means is connected internally of, and mounted suspended from, the pad and/or pad holder by requiring no more than suitable modification to the pad clamping member.

Notwithstanding the transmission of signals indicative of a predetermined condition within the friction lining, the condition transmitter may, if it can transmit a code or the like characteristic thereof, identify the structure of the brake and friction pad, and such information may be relevant to interpretation of the condition signal or simply indicate in advance what type of friction lining is required if replaced.

Condition sensing and coupling of condition signals to remote processing means has been described above for one brake friction lining defined by a friction pad and trackside coupling reception means. Although this may be useful in respect of bringing specific coupling transmission means and coupling reception means together to effect coupling that makes off-vehicle reporting practicable, particular advantage is obtained by coupling a large number of identical or similar coupling transmission means with one trackside coupling reception means by sequentially bringing each within coupling relationship, by spatially and temporally disposing different wheel axle sets of a relatively moving vehicle with respect to the coupling reception means of the above discussed train of tractor locomotive and freight wagons.

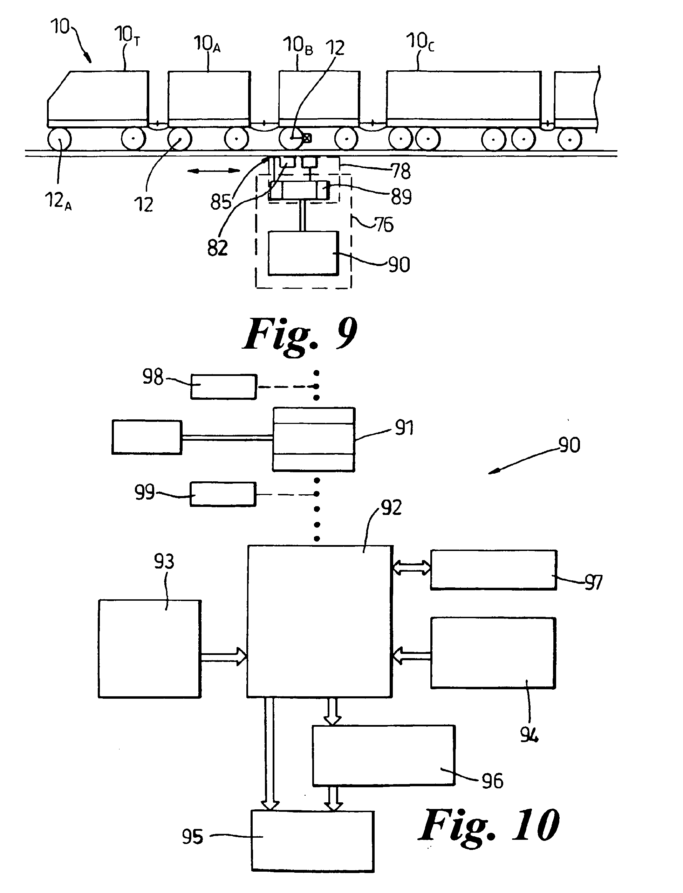

Referring to Figure 9 in addition to Figure 1(a), there is shown a railroad vehicle 10 as a train made up of tractor locomotive 10_{T} trailing a plurality of sub-component trailer wagons 10_{A}, 10_{B}, 10_{C} ..., each of which has a plurality of wheel axle sets, as described above for wagon 10_{B}, that are spaced apart in the direction of vehicle travel. Each wheel axle set has a plurality of brakes having friction linings which may be monitored and functionally coupled with the single coupling reception means 78 of processing means 76 by being identical in terms of condition signal transmitted in response to sensing of a predetermined friction lining condition. All, or some only, of the brakes may be monitored for one or more predetermined conditions in the friction linings thereof, but each monitored brake has, in addition to a friction pad with condition sensing apparatus, such as 52, coupling transmission means of the form shown in Figure 3(d) and empowered when selected by reception of radio frequency energy from trackside emitter 82.

As the vehicle (train) travels relative to the processing means the wheel axle sets pass the processing means sequentially, one at a time, although the separation between successive passes may vary according to how the axles are distributed on each trailer. As each wheel axle set passes the vicinity of the processing means the coupling transmission means of each monitored brake is empowered and if a predetermined lining condition is sensed a condition signal is transmitted for reception by the coupling reception means. As mentioned above, the selection energy emission may be confined to a relatively narrow beam that avoids selecting the coupling transmission means of any adjacent wheel axle set and the condition transmitter and/or coupling receiver may also be constrained in terms of beamwidth in the direction of travel and/or strength and/or sensitivity respectively that avoids received signal crosstalk from any condition signals from an adjacent wheel axle set inadvertently selected by the energy emission.

Thus by the simple expedient of employing identical, unpowered coupling transmission means for each of the monitored brakes of a multi-axle vehicle (train), it is possible by a single off-vehicle signal reception and processing means to report existence of a predetermined condition in any of the relatively few friction linings associated with any wheel axle set of a large number of axle sets of the vehicle.

Knowing that a condition exists somewhere along the vehicle is of limited practicality when a large number of wheel axle sets are involved and identification of which vehicle sub-component (wagon), axle set or even brake contains a said predetermined condition may be effected within the constraints of information available.

In general, such information may be available in terms of stored logistical information regarding make-up of the vehicle (train) or may be available by configuring the condition sensing apparatus and/or coupling transmission means associated with any wagon or brake to provide condition signals implicitly identifying it.

It will be appreciated that such brake- or wagon-specific signal, notwithstanding its inherent complexity, requires less processing prior to condition reporting but requires each coupling transmission means fitted to the vehicle (train) to be individually configured.

On the other hand, by employing identical coupling means at any of the wheel axle sets of the vehicle, both the means and their fitting may be simplified, and the process of identifying and reporting a predetermined friction lining condition will be described for the use of such identical coupling transmission means at a plurality of wheel axle sets. The processing means 76 has associated therewith a trackside wheel or axle counter 85 that is operable to detect the passage of each wheel axle set, the first one 12_{A} comprising a datum point of the vehicle (train), so that the detection of each subsequent wheel axle set records its position within the vehicle (train) and is correlated with any condition signal received from the axle set during its passage to provide an identification signal that contains both condition-existence and axle-location information.

In a situation where the vehicle (train) is to remain intact, any such identification signals may be reported and any wheel axle set approached by counting from the datum point and permitting maintenance personnel to make a more detailed examination and/or friction pad replacement, as discussed further below. In a situation where the vehicle (train) will, or may be, dismantled, any identification signals are further processed to identify the particular vehicle sub-component (wagon) on which the wheel axle set giving rise to the condition signal is located. Identification signals are forwarded to identification means 90 remote from the trackside processing means, and typically at a maintenance depot or train assembly yard, either in real time, or as a data burst of stored signals, and possibly by way of forwarding interface means 91.

The identification means 90 includes a central processing unit (CPU) 92 provided with a data link to a schedule store 93 which includes details of the vehicle (train) make-up, namely the position of each wagon and wagon identity, its serial number. The identification means CPU is also provided with a data link to a database 94 of wagon (vehicle) specification data, identifying for each wagon at least how many wheel axle sets it has and possibly the number of brakes or monitored brakes on each wheel axle set. The identification means is thus able to construct a virtual vehicle (train) in terms of axle set disposition of the wagons and translate received identification signals into wagon identities and possibly wheel axle set or sets thereof. Data signals comprising such identification may be fed to a reporting device 95, such as a printer or visual display unit. Alternatively or additionally, such data signals of identification may be fed to maintenance scheduling apparatus 96 wherein any particular wagon identified may be booked for at least friction lining maintenance.

It will be appreciated from the above discussion regarding the nature of predetermined conditions sensed in a friction lining and the possibility of producing different (secondary) condition signals that relate to secondary lining conditions, these will also be received at the processing means and forwarded to the identification means. The identification means may record at 97 all condition signals in relation to a particular vehicle (wagon) axle set and if subsequently identification signals representing such secondary condition signal are received, performing a wear-rate test to determine if such friction lining condition requires reporting and or maintenance action not warranted by existence of the first predetermined condition.

As mentioned above, the identification means is most conveniently remote from the trackside processing means, but it need not be so. If it is, forwarding of identification signals to such remote identification means may be directly in real time or by data burst of signals collected in store 98 by way of forwarding interface 91 that employs a land line or electromagnetic transmission. Forwarding may alternatively be effected by way of interface 91 that may be physically transported between the trackside location and the location of the identification means 90. Such forwarding interface 91 may be carried by the vehicle (train) itself with identification signals forwarded thereto (most conveniently as a stored data burst) when it is at a predetermined distance along the track from the trackside location of the processing means; when the vehicle (train) returns to the depot, it can download the identification data for processing, possibly by way of signal store 99.

As described above, if the coupling transmission means is not specific to any brake, the identification means is able only to identify a wheel axle set in which a friction lining condition exists, not the particular brake of the axle set. In practice, this may not be a problem as existence of any friction lining condition on the vehicle (wagon) may justify physical (visual) inspection of each brake and its friction lining on the identified vehicle (wagon) or identified axle. However, if the difficulty of access and/or time taken is considered unacceptable, the above arrangement may be adapted to facilitate identification of a specific brake or friction lining. The trackside processing means 76 may be formed as a trans-portable unit which may be taken to, and directed at, the coupling transmission means associated with an individual brake friction lining. Once illuminated by selection energy emitted by the unit, the coupling transmission means will return a condition signal if a predetermined condition exists in the brake friction lining. The processing means of the portable unit may simply provide a visual indication reporting if a predetermined condition exists that has given rise to a transmitted condition signal. Insofar as the operation is not required to be performed whilst there is relative passage, the sensitivity and/or beamwidth of the coupling reception means may be lower and, if appropriate, the selection means energy emission may be lower and/or of narrower beamwidth to ensure that the coupling transmission means associated only with a specific brake friction lining is addressed.

Alternatively, if the coupling transmission means is disposed so that it is visible by maintenance personnel the portable coupling reception means and processing unit may comprise simply a selection means energy emitter that can be directed at specific coupling transmission means, which coupling transmission means is provided with a visual indicator that it is transmitting a condition signal, should a predetermined condition exist. Additionally, if the coupling transmission means is of the form that responds to illumination by the selection energy emission to provide a confirmation signal absent the predetermined condition, the visual indicator, or a further one, may be arranged to confirm that the coupling transmission means has been correctly addressed and that a predetermined condition does not exist within the friction lining.

Similarly, if it is practicable to presume that all of the brake friction linings on any axle behave similarly and to attend to all when one exhibits a predetermined condition, then it may be appropriate to monitor only one brake friction lining per wheel axle set by way of condition sensing apparatus and coupling transmission means associated therewith.

The number of brakes chosen or available for monitoring may vary from axle set to axle set, not least according to vehicle (wagon) design. If the coupling transmission means is manufactured or configurable for use with a particular one of such small number of positions, by virtue of transmission frequency or modulation frequency or code, then signals received and processed from the coupling transmission means may identify both axle set and brake position on the axle set. If the coupling transmission is further programmable with the vehicle (wagon) type, the signals may furthermore provide notification of the type of friction lining required as a replacement. Finally, if the coupling transmission means is programmable with vehicle (wagon) identification, the processing and identification means may be much simplified but in exchange for losing the ability for identically manufactured coupling transmission units to be deployed quickly and relatively indiscriminately by maintenance operatives having little skill in the installation and connecting of brake condition reporting arrangements.

It will be appreciated that although the invention has been described principally with reference to railway vehicle disc brakes system according to the UIC standard, it is generally applicable to other railway vehicle brake systems conforming to different standards by making suitable modifications to the condition sensing means and/or the mounting of the coupling transmission means with respect thereto, It is not, of course restricted to use with railway brake systems and may be employed, with disc or drum brakes of road going vehicles which, although self-steering and not confined to following a track, may be caused to follow a prescribed path or track when entering or leaving a depot or en route in order to have any predetermined condition of a brake friction lining reported.

It will be understood that whereas maximum benefit in terms of cost and labour saving is to be found with a vehicle in the form of a long train having a plurality of wheel axle sets, an arrangement in accordance with the invention may be employed with vehicles having fewer wheel axle sets and, if desired, completely independently of any vehicle power source, provided of course that the vehicle is constrained to effect relative movement with respect to trackside processing means.

## Claims

1. A friction lining condition reporting arrangement (40; 140; 240; 440; 540) for a vehicle brake system (20_{LI}; 120; 220; 420; 520) including at least one friction pad (30_{LI}; 130; 230; 330; 330'; 430; 530), comprising a friction lining and backing, and for each friction pad a holder (28_{LI}; 128; 228; 428; 528) arranged to operatively overlie the backing of a held friction pad and receive in a pad locating groove (31_{LI}; 131; 231) an upstanding mount (36; 136; 236; 336; 336'; 436; 536) of the backing,
said friction lining condition reporting arrangement comprising
condition sensing apparatus (42, 52; 142; 242; 342; 442; 542) having an operational part (44, 54; 144; 244; 344; 344' 544) arranged to be disposed in or adjacent a said friction lining and a conductive path (55) connecting the operational part to at least one conductor termination (46, 56; 146; 246; 346; 346'; 446; 546) accessible from externally of the friction lining, and
coupling means (60; 160; 260; 460; 560) operable to provide condition signals, representative of the state of the condition sensing apparatus, to signal processing means (76) remote from the friction lining, **characterised in that**
the coupling means comprises coupling transmission means (62; 162; 262; 462; 562) including a signal coupling member (63; 263; 463; 563) having at least one coupling contact (64; 264; 464; 564), the signal coupling member being arranged to extend into a coupling cavity (65; 165; 265; 365; 365'; 565) in the upstanding backing mount and therein effect conductive abutment between a said coupling contact and a said conductor termination and support the coupling transmission means with respect to the pad and holder.

2. An arrangement as claimed in claim 1 **characterised in that** the signal coupling member (63; 263) is arranged to effect said conductive abutment by resilient deformation of at least one of the abutting coupling conductor and conductor terminations (64, 56; 64; 146; 264;246) and be acted upon by reaction to said deformation, exerted in a direction away from the conductor termination, to be biassed into engagement with a boundary (31'; 138; 237) of the coupling cavity inhibiting displacement of the signal coupling member from the conductor termination.

3. An arrangement as claimed in claim 1 or claim 2 **characterised in that** the signal coupling member (63; 263) is arranged to slide in to and out of a coupling cavity (65; 265) extending to an end of the raised mount (36; 236) by way of a mouth (67; 167; 267) at said end of the mount.

4. An arrangement as claimed in any one of claims 1 to 3 **characterised in that** the signal coupling member (63; 263) is arranged to extend within the coupling cavity (65; 265) along a direction substantially parallel to that in which the associated braked vehicle wheel 14_{L} turns.

5. An arrangement as claimed in any one of the preceding claims **characterised in that** the conductor termination (46, 56; 146) is arranged to extend into, and effect conductive abutment with a coupling contact (64) of the signal coupling member in, a said coupling cavity (65; 165) arranged to have a part (31'; 138) of the holder defining a boundary thereof.

6. An arrangement as claimed in claim 5 **characterised in that** the conductor termination (46, 56) is arranged to extend into, and effect conductive abutment with a coupling contact of the signal coupling member in a coupling cavity (65) defined as a backing surface recess (66) open in a direction away from the friction lining.

7. An arrangement as claimed in any one of claims 1 to 6 for a brake system in which the friction pad is retained held in the holder by a clamping member (238), in which arrangement and the signal coupling member (263) of the coupling transmission means comprises the clamping member (238).

8. An arrangement as claimed in any one of the preceding claims **characterised in that** the condition sensing apparatus includes a carrier (53) formed of electrically insulating material for at least the conductive path (55) and conductor terminations (56), the operational part (54) and conductor terminations being on opposite sides thereof, said carrier and conductor terminations being arranged to isolate at least one coupling contact (64) of the signal coupling member from the pad backing (34).

9. An arrangement as claimed in any one of the preceding claims **characterised in that** the coupling transmission means (62) is operable to effect transmission of the condition signals at radio or higher frequencies to coupling reception means (78), disposed with the remote processing means (76).

10. An arrangement as claimed in any one of the preceding claims including selection means (80) comprising, remote from the brake friction lining, an emitter of electromagnetic selection energy (82) and, in the coupling transmission means, selection control means (84) including selection energy receiving means (86), operable to control transmission from the coupling transmission means.

11. A vehicle brake system including at least one friction pad (30_{LI}; 130; 230; 330; 330'; 430; 530), comprising a lining of friction material (32_{LI}; 132; 232; 332; 432; 532) and a supportive backing therefor (34_{LI}; 143; 234; 334; 334'; 434; 534) having an upstanding mount (36; 136; 236; 336; 336'; 436; 536), and for each friction pad a holder (28_{LI}; 128; 228; 428; 528) operatively overlying the backing of the friction pad and having a pad locating groove (31_{LI}; 131; 231) to locate the pad with respect to the holder, and
**characterised in that** there is provided a friction lining condition reporting arrangement as claimed in any one of claims 1 to 10, and
at least one coupling cavity (65; 165; 265; 365; 365'; 565) is defined in the upstanding mount of the backing of the friction pad,
the condition sensing apparatus (42, 52; 142; 242; 342; 442; 542) has an operational part (44, 54; 144; 244; 344; 344'; 444) disposed in or adjacent a
said friction lining and a conductive path (55) connecting the operational part to at least one conductor termination (46, 56; 146, 246, 346; 346'; 446; 546) within the coupling cavity accessible from externally thereof, and
the coupling transmission means is supported by the signal coupling member (63; 263; 463; 563) extending into the coupling cavity to effect therein conductive abutment between at least one coupling contact of the signal coupling member and a said conductor termination of the condition sensing apparatus.

12. A brake system as claimed in claim 11 **characterised in that** at least one of said coupling contact (64; 264) and conductor termination (46, 56; 246) is arranged to be resiliently deformable and upstanding towards the other and the signal coupling member (63; 263) is arranged to be supported in the coupling cavity such that it is inhibited from displacement thereof away from said at least one conductor termination by engagement with a boundary (31'; 138; 237) of the coupling cavity and to effect conductive abutment between the surfaces of the coupling contact and conductor termination with at least one of them resiliently deformed and exerting on the signal coupling member a bias force urging it into said engagement.

13. A brake system as claimed in claim 11 or claim 12 **characterised in that** said upstanding mount of the friction pad backing has the coupling cavity defined within it extending to a mouth (67; 167; 267) at the end of the mount.

14. A brake system as claimed in claim 11 to 13 **characterised in that** the friction pad (230) is retained held in the holder by a clamping member (238) and **characterised in that** the signal coupling member (263) comprises the clamping member.

15. A brake system as claimed in any one of claims 11 to 14 **characterised in that** said friction pad backing (34) includes an aperture (58) extending into the friction material and the condition sensing apparatus (52) includes a carrier (53) for the operational part (54), conductive path (55) and conductor terminations (56) thereof disposed overlying the backing and said aperture with the operational part of the condition sensing apparatus in the aperture.

16. A brake system as claimed in any one of claims 11 to 15 **characterised in that** the condition sensing apparatus (52) includes a carrier (53) formed of electrically insulating material for at least the conductive path (55) and conductor terminations (56), the operational part (54) and conductor terminations being on opposite sides thereof, said carrier and conductor terminations being arranged to isolate at least one coupling contact (64) of the signal coupling member from the pad backing.

17. A brake system friction pad (30_{LI}; 130; 230; 330; 330'; 430; 530), comprising a lining of friction material (32_{LI}; 132; 232; 332; 332'; 432; 532) and a supportive backing therefor (34_{LI}; 143; 234; 334; 334'; 434; 534) having an upstanding mount (36; 136; 236; 336; 336'; 436; 536), suitable for a vehicle brake system including for said friction pad a holder (28_{LI}; 128; 228; 428; 528) arranged to operatively overlie the backing of a held friction pad and receive in a pad locating groove (31_{LI}; 131; 231) said upstanding mount of the backing, and **characterised by** a coupling cavity (65; 165; 265; 365; 365'; 565) defined in the upstanding backing mount, a friction lining condition reporting arrangement as claimed in any one of claims 1 to 10 in which the lining sensing apparatus (42, 52; 142; 242; 342; 442; 542) has an operational part (44, 54; 144; 244; 344; 344'; 444) disposed in or adjacent the lining, and a conductive path (55) connecting the operational part to at least one conductor termination (46, 56; 146; 246; 346; 346'; 446; 546) extending into the coupling cavity and adapted for rubbing contact therein with at least one coupling contact (64; 264; 464; 564) of a signal coupling member (63; 263; 463; 563).

18. A friction pad as claimed in claim 17 **characterised in that** the condition sensing apparatus includes a unitary carrier (53) for the operational part, conductive path and conductor terminations, disposed overlying the backing (34).

19. A friction pad as claimed in claim 17 or claim 18 **characterised in that** the backing includes an aperture (58) extending into the friction lining and containing therein the operational part of the condition sensing apparatus.

20. A friction pad as claimed in any one of claims 17 to 19 **characterised in that** the coupling cavity (65) comprises a backing recess (66) open in a direction away from the friction lining (32_{LI}) in which recess the conductor terminations, and if appropriate the carrier, are contained.

21. A friction pad as claimed in claim 20 **characterised in that** the backing recess (66) extends along the mount to a mouth (67) at the end of the pad.

## Patentansprüche

1. Reibbelagzustandsmeldungsanordnung (40; 140; 240; 440; 540) für ein Fahrzeugbremssystem (20_{LI}; 120; 220; 420; 520), das zumindest einen Bremsklotz (30_{LI}; 130; 230; 330; 330'; 430; 530) enthält, der umfaßt: einen Reibbelag und eine Unterlage, für jeden Bremsklotz eine Halterung (28_{LI}; 128; 228; 428; 528), die eingerichtet ist, die Unterlage eines gehaltenen Bremsklotzes wirksam zu überlagern und in einer Klotzpaßrille (31_{LI}; 131; 231) eine aufrechte Befestigung (36; 136; 236; 336; 336'; 436; 536) der Unterlage aufzunehmen,
wobei die Reibbelagzustandsmeldungsanordnung umfaßt:
eine Zustandsabtastvorrichtung (42, 52; 142; 242; 342; 442; 542) mit einem Funktionsteil (44, 54; 144; 244; 344; 344', 544), der eingerichtet ist, in oder benachbart zu dem Reibbelag angeordnet zu werden, und einer Leiterbahn (55), die den Funktionsteil mit zumindest einem Leiteranschluß (46, 56; 146; 246; 346; 346'; 446; 546) verbindet, der von außerhalb des Reibbelags zugänglich ist, und
eine Kopplungseinrichtung (60; 160; 260; 460; 560), die betreibbar ist, um Zustandssignale, die den Zustand der Zustandsabtastvorrichtung darstellen, bereitzustellen und an eine von dem Reibbelag entfernte Verarbeitungseinrichtung (76) zu signalisieren, **dadurch gekennzeichnet, daß** die Kopplungseinrichtung umfaßt: eine Kopplungsübertragungseinrichtung (62; 162; 262; 462; 562) mit einem Signalkopplungselement (63; 263; 463; 563) mit zumindest einem Kopplungskontakt (64; 264; 464; 564), wobei das Signalkopplungselement derart eingerichtet ist, daß es sich in einen Kopplungshohlraum (65; 165; 265; 365; 365', 565) in der aufrechten Unterlagenbefestigung erstreckt und darin das leitende Anliegen zwischen dem Kopplungskontakt und dem Leiteranschluß bewirkt und die Kopplungsübertragungseinrichtung in Bezug auf den Klotz und die Halterung unterstützt.

2. Anordnung nach Anspruch 1, **dadurch gekennzeichnet, daß** das Signalkopplungselement (63; 263) derart eingerichtet ist, daß es das leitende Anliegen durch elastische Verformung des anliegenden Kopplungsleiters und/oder der Leiteranschlüsse (64; 56; 64; 146; 264; 246) bewirkt und eine Reaktion auf diese Verformung in eine Richtung weg von dem Leiteranschluß ausgeübt wird, um in Eingriff mit einem Rand (31', 138; 237) des Kopplungshohlraums vorgespannt zu werden, wobei die Verschiebung des Signalkopplungselementes von dem Leiteranschluß verhindert wird.

3. Anordnung nach Anspruch 1 oder 2, **dadurch gekennzeichnet, daß** das Signalkopplungselement (63; 263) derart eingerichtet ist, daß es in und aus einem Kopplungshohlraum (65; 265) gleitet, der sich mittels einer Mündung (67; 167; 267) an dem Ende der Befestigung zu einem Ende der erhöhten Befestigung (36; 236) erstreckt.

4. Anordnung nach einem der Ansprüche 1 bis 3, **dadurch gekennzeichnet, daß** das Signalkopplungselement (63; 263) derart eingerichtet ist, daß es sich innerhalb des Kopplungshohlraums (65; 265) entlang einer Richtung erstreckt, die im wesentlichen parallel zu der ist, in der sich das zugehörige gebremste Fahrzeugrad 14_{L} dreht.

5. Anordnung nach einem der vorangehenden Ansprüche, **dadurch gekennzeichnet, daß** der Leiteranschluß (46; 56; 146) derart eingerichtet ist, daß er sich in einen Kopplungshohlraum (65; 165) erstreckt, der so eingerichtet ist, daß ein Teil (31'; 138) der Halterung einen Rand von ihm begrenzt, und er das leitende Anliegen an dem Kopplungskontakt (64) des Signalkopplungselements bewirkt.

6. Anordnung nach Anspruch 5, **dadurch gekennzeichnet, daß** der Leiteranschluß (46, 56) derart eingerichtet ist, daß er sich in einen Kopplungshohlraum (65) erstreckt, der als eine Unterlagenflächenaussparung (66) definiert ist, die in eine Richtung von dem Reibbelag weg offen ist, und das leitende Anliegen an einem Kopplungskontakt des Signalkopplungselement darin bewirkt.

7. Anordnung nach einem der Ansprüche 1 bis 6 für ein Bremssystem, in dem der Bremsklotz durch ein Klemmelement (238) in der Halterung fixiert gehalten wird, wobei die Anordnung und das Signalkopplungselement (263) der Kopplungsübertragungseinrichtung das Klemmelement (238) umfassen.

8. Anordnung nach einem der vorangehenden Ansprüche, **dadurch gekennzeichnet, daß** die Zustandsabtastvorrichtung einen aus elektrisch isolierendem Material ausgebildeten Träger (53) zumindest für die Leiterbahn (55) und Leiteranschlüsse (56) umfaßt, wobei der Funktionsteil (54) und die Leiteranschlüsse auf gegenüberliegenden Seiten davon sind, wobei der Träger und die Leiteranschlüsse derart angeordnet sind, daß sie zumindest einen Kopplungskontakt (64) des Signalkopplungselements von der Klotzunterlage (34) isolieren.

9. Anordnung nach einem der vorangehenden Ansprüche, **dadurch gekennzeichnet, daß** die Kopplungsübertragungseinrichtung (62) betreibbar ist, um die Übertragung der Zustandssignale an eine bei der entfernten Verarbeitungseinrichtung angeordnete (76) Kopplungsempfangseinrichtung (78) auf Funk- oder höheren Frequenzen zu bewirken.

10. Anordnung nach einem der vorangehenden Ansprüche, mit einer Auswahleinrichtung (80), die entfernt von dem Bremsreibbelag einen Sender für elektromagnetische Auswahlenergie (82) und in der Kopplungsübertragungseinrichtung eine Auswahlsteuer- bzw. -regeleinrichtung (84) mit Auswahlenergieempfangseinrichtung (86) umfaßt, die betreibbar ist, um die Übertragung von der Kopplungsübertragungseinrichtung zu steuern bzw. zu regeln.

11. Fahrzeugbremssystem mit zumindest einem Bremsklotz (30_{LI}; 130; 230; 330; 330'; 430; 530), der umfaßt: einen Belag aus Reibmaterial (32_{LI}; 132; 232; 332; 432; 532) und eine unterstützende Unterlage (34_{LI}; 143; 234; 334; 334'; 434; 534) dafür mit einer aufrechten Befestigung (36; 136; 236; 336; 336'; 436; 536) und für jeden Bremsklotz eine Halterung (28_{LI}; 128; 228; 428; 528), welche die Unterlage des Bremsklotzes wirksam überlagert und eine Klotzpaßrille (31_{LI}; 131; 231) hat, um den Klotz in Bezug auf die Halterung anzuordnen, und
**dadurch gekennzeichnet, daß** eine Reibbelagzustandsmeldungsanordnung wie in jedem der Ansprüche 1 bis 10 beansprucht, bereitgestellt ist, und
zumindest ein Kopplungshohlraum (65; 165; 265; 365; 365'; 565) in der aufrechten Befestigung der Unterlage des Bremsklotzes definiert ist,
die Zustandsabtastvorrichtung (42, 52; 142; 242; 342; 442; 542) einen Funktionsteil (44, 54; 144; 244; 344; 344', 544), der in oder benachbart zu dem Reibbelag angeordnet ist, und eine Leiterbahn (55) hat, die den Funktionsteil mit zumindest einem Leiteranschluß (46, 56; 146; 246; 346; 346'; 446; 546) innerhalb dem Kopplungshohlraum von außen zugänglich verbindet, und
die Kopplungsübertragungseinrichtung von dem Signalkopplungselement (63; 263; 463; 563) unterstützt wird, welches sich in den Kopplungshohlraum erstreckt, um darin ein leitendes Anliegen zwischen zumindest einem Kopplungskontakt des Signalkopplungselements und dem Leiteranschluß der Zustandabtastvorrichtung zu bewirken.

12. Bremssystem nach Anspruch 11, **dadurch gekennzeichnet, daß** der Kopplungskontakt (64; 264) und/oder der Leiteranschluß (46, 56; 246) eingerichtet ist, elastisch verformbar und in Richtung des jeweils anderen aufrecht zu sein, wobei das Signalkopplungselement (63; 263) eingerichtet ist, in dem Kopplungshohlraum derart unterstützt zu werden, daß seine Verschiebung weg von dem zumindest einen Leiteranschluß durch das Eingreifen mit einem Rand (31'; 138; 237) des Kopplungshohlraums verhindert wird und das leitende Anliegen zwischen den Oberflächen des Kopplungskontakts und des Leiteranschlusses, wobei zumindest einer von ihnen elastisch verformt ist, bewirkt wird, wobei auf das Signalkopplungselement eine Vorspannkraft ausgeübt wird, die es in diesen Eingriff drängt.

13. Bremssystem nach Anspruch 11 oder 12, **dadurch gekennzeichnet, daß** die aufrechte Befestigung der Bremsklotzunterlage den Kopplungshohlraum in sich begrenzt hat, wobei sich dieser zu einer Mündung (67; 167; 267) am Ende der Befestigung erstreckt.

14. Bremssystem nach den Ansprüchen 11 bis 13, **dadurch gekennzeichnet, daß** der Bremsklotz (230) durch ein Klemmelement (238) fixiert in der Halterung gehalten wird, und **dadurch gekennzeichnet, daß** das Signalkopplungselement (263) das Klemmelement umfaßt.

15. Bremssystem nach einem der Ansprüche 11 bis 14, **dadurch gekennzeichnet, daß** die Bremsklotzunterlage (34) eine Öffnung (58) umfaßt, die sich in das Reibmaterial erstreckt, und die Zustandsabtastvorrichtung (52) einen Träger (53) für den Funktionsteil (54) umfaßt, wobei dessen Leiterbahn (55) und Leiteranschlüsse (56) die Unterlage und die Öffnung überlagernd angeordnet sind, wobei der Funktionsteil der Zustandsabtastvorrichtung in der Öffnung ist.

16. Bremssystem nach einem der Ansprüche 11 bis 15, **dadurch gekennzeichnet, daß** die Zustandsabtastvorrichtung (25) einen aus elektrisch isolierendem Material ausgebildeten Träger (53) zumindest für die Leiterbahn (55) und Leiteranschlüsse (56) umfaßt, wobei der Funktionsteil (54) und die Leiteranschlüsse auf gegenüberliegenden Seiten davon sind, wobei der Träger und die Leiteranschlüsse derart angeordnet sind, daß sie zumindest einen Kopplungskontakt (64) des Signalkopplungselements von der Klotzunterlage isolieren.

17. Bremsklotz (30_{LI}; 230; 330; 330'; 430; 530) für Bremssystem, der umfaßt: einen Belag aus Reibmaterial (32_{LI}; 132; 232; 332; 332'; 432; 532) und eine unterstützende Unterlage dafür (34_{LI}; 143; 234; 334; 334'; 434; 534) mit einer aufrechten Befestigung (36; 136; 236; 336; 336'; 436; 536), die für ein Fahrzeugbremssystem geeignet ist, welches für den Bremsklotz eine Halterung (28_{LI}; 128; 228; 428; 528) umfaßt, die eingerichtet ist, die Unterlage eines gehaltenen Bremsklotzes wirksam zu überlagern und in einer Klotzpaßrille (31_{LI}; 131; 231) die aufrechte Befestigung der Unterlage aufzunehmen, und **gekennzeichnet durch** einen in der aufrechten Unterlagenbefestigung definierten Kopplungshohlraum (65; 165; 265; 365; 365'; 565), eine Reibbelagzustandsmeldungsanordnung nach einem der Ansprüche 1 bis 10, in welcher die Belagabtastvorrichtung (42, 52; 142; 242; 342; 442; 542) einen in oder benachbart zu dem Belag angeordneten Funktionsteil (44, 54; 144; 244; 344; 344'; 444) hat, und eine Leiterbahn (55) den Funktionsteil mit zumindest einem Leiteranschluß (46, 56; 146; 246; 346; 346'; 446; 546) verbindet, welcher sich in den Kopplungshohlraum erstreckt und für einen reibenden Kontakt darin mit zumindest einem Kopplungskontakt (64; 264; 464; 564) eines Signalkopplungselements (63; 263; 463; 563) geeignet ist.

18. Bremsklotz nach Anspruch 17, **dadurch gekennzeichnet, daß** die Zustandsabtastvorrichtung einen einheitlichen Träger (53) für den Funktionsteil, die Leiterbahn und die Leiteranschlüsse umfaßt, der die Unterlage (34) überlagernd angeordnet ist.

19. Bremsklotz nach Anspruch 17 oder 18, **dadurch gekennzeichnet, daß** die Unterlage eine Öffnung (58) umfaßt, die sich in den Reibbelag erstreckt und darin den Funktionsteil der Zustandsabtastvorrichtung enthält.

20. Bremsklotz nach einem der Ansprüche 17 bis 19, **dadurch gekennzeichnet, daß** der Kopplungshohlraum (65) eine Unterlagenaussparung (66) umfaßt, die in eine Richtung weg von dem Reibbelag (32_{L1}) offen ist, in welcher die Leiteranschlüsse und gegebenenfalls der Träger enthalten sind.

21. Bremsklotz nach Anspruch 20, **dadurch gekennzeichnet, daß** die Unterlagenaussparung (66) sich entlang der Befestigung zu einer Mündung (67) am Ende des Klotzes erstreckt.

## Revendications

1. Dispositif (40 ; 140 ; 240 ; 440 ; 540) rendant compte de la condition d'une garniture de frottement pour un système (20_{LI} ; 120 ; 220 ; 420 ; 520) de frein de véhicule comprenant au moins un patin de frottement (30_{LI} ; 130 ; 230 ; 330 ; 330' ; 430 ; 530), comportant une garniture de frottement et un renfort, et, pour chaque patin de frottement, un support (28_{LI} ; 128 ; 228 ; 428 ; 528) agencé pour recouvrir fonctionnellement le renfort d'un patin de frottement supporté et recevoir, dans une rainure (31_{LI} ; 131 ; 231) de positionnement de patin, un montant de montage (36 ; 136 ; 236 ; 336 ; 336' ; 436 ; 536) du renfort,
ledit dispositif rendant compte de la condition d'une garniture de frottement comportant
un appareil (42, 52 ; 142 ; 242 ; 342 ; 442 ; 542) de détection d'état ayant une pièce fonctionnelle (44, 54 ; 144 ; 244 ; 344 ; 344' ; 544) agencée de façon à être disposée dans ladite garniture de frottement ou à proximité immédiate de celle-ci et un chemin conducteur (55) reliant la pièce fonctionnelle à au moins une terminaison conductrice (46, 56 ; 146 ; 246 ; 346 ; 346' ; 446 ; 546) accessible depuis l'extérieur de la garniture de frottement, et
un moyen d'accouplement (60 ; 160 ; 260 ; 460 ; 560) pouvant être mis en oeuvre pour fournir des signaux de condition, représentatifs de l'état de l'appareil de détection de condition, à un moyen (76) de traitement de signaux éloigné de la garniture de frottement, **caractérisé en ce que** le moyen d'accouplement comporte un moyen (62 ; 162; 262 ; 462 ; 562) de transmission d'accouplement comprenant un élément (63 ; 263 ; 463 ; 563) d'accouplement de signal ayant au moins un contact d'accouplement (64 ; 264 ; 464 ; 564), l'élément d'accouplement de signal étant agencé de façon à avancer dans une cavité d'accouplement (65 ; 165 ; 265 ; 365 ; 365' ; 565) dans le montant de montage du renfort et, dans celui-ci, à effectuer une mise en appui conductrice entre ledit contact d'accouplement et ladite terminaison conductrice et à supporter le moyen de transmission d'accouplement par rapport au patin et au support.

2. Dispositif selon la revendication 1, dans lequel l'élément (63 ; 263) d'accouplement de signal est agencé pour effectuer ladite mise en appui conductrice par une déformation élastique d'au moins l'un du conducteur d'accouplement et des terminaisons conductrices (64, 56 ; 64 ; 146 ; 264 ; 246) en appui et à être soumis à une action due à une réaction à ladite déformation, exercée dans un sens s'éloignant de la terminaison conductrice, pour être rappelé en engagement avec une limite (31' ; 138 ; 237) de la cavité d'accouplement empêchant le déplacement de l'élément d'accouplement de signal à partir de la terminaison conductrice.

3. Dispositif selon la revendication 1 ou la revendication 2, **caractérisé en ce que** l'élément (63 ; 263) d'accouplement de signal est agencé de façon à entrer dans, et sortir de, en coulissant, une cavité d'accouplement (65 ; 265) s'étendant jusqu'à une extrémité du montant de montage (36 ; 236) en passant par une embouchure (67 ; 167 ; 267) à ladite extrémité du montant.

4. Dispositif selon l'une quelconque des revendications 1 à 3, **caractérisé en ce que** l'élément d'accouplement de signal (63 ; 263) est agencé de façon à s'étendre à l'intérieur de la cavité d'accouplement (65 ; 265) suivant une direction sensiblement parallèle à celle dans laquelle tourne la roue associée freinée (14_{L}) de véhicule.

5. Dispositif selon l'une quelconque des revendications précédentes, **caractérisé en ce que** la terminaison conductrice (46, 56 ; 146) est agencée de façon à avancer dans, et à venir en appui conducteur avec un contact d'accouplement (64) de l'élément d'accouplement de signal dans, ladite cavité d'accouplement (65 ; 165) agencée de façon qu'une partie (31' ; 138) du support en définisse une limite.

6. Dispositif selon la revendication 5, **caractérisé en ce que** la terminaison conductrice (46, 56) est agencée de façon à avancer dans, et à venir en appui conducteur avec un contact d'accouplement de l'élément d'accouplement de signal dans, une cavité d'accouplement (65) définie en tant qu'évidement (66) de surface de renfort ouvert dans une direction s'éloignant de la garniture de frottement.

7. Dispositif selon l'une quelconque des revendications 1 à 6 pour un système de frein dans lequel le patin de frottement est maintenu en étant retenu dans le support par un élément de serrage (238), dispositif dans lequel 1,'élément (263) d'accouplement de signal du moyen de transmission d'accouplement comprend l'élément de serrage (238).

8. Dispositif selon l'une quelconque des revendications précédentes, **caractérisé en ce que** l'appareil de détection de condition comprend un support (53) formé d'une matière électriquement isolante pour au moins le chemin conducteur (55) et les terminaisons conductrices (56), la partie fonctionnelle (54) et les terminaisons conductrices étant sur des côtés opposés de celui-ci, ledit support et lesdites terminaisons conductrices étant agencés de façon à isoler au moins un contact d'accouplement (64) de l'élément d'accouplement de signal du renfort (34) de patin.

9. Dispositif selon l'une quelconque des revendications précédentes, **caractérisé en ce que** le moyen (62) de transmission d'accouplement peut être mis en oeuvre pour effectuer la transmission des signaux de condition à des fréquences radio ou des fréquences plus élevées à un moyen (78) de réception d'accouplement, disposé avec le moyen (76) de traitement à distance.

10. Dispositif selon l'une quelconque des revendications précédentes, comprenant un moyen de sélection (80) comportant, à distance de la garniture de frottement de frein, un émetteur d'une énergie de sélection électromagnétique (82) et, dans le moyen de transmission d'accouplement, un moyen (84) de commande de sélection comprenant un moyen (86) de réception d'énergie de sélection, pouvant être mis en oeuvre pour commander une transmission depuis le moyen de transmission d'accouplement.

11. Système de frein de véhicule comprenant au moins un patin de frottement (30_{LI} ; 130 ; 230 ; 330 ; 330' ; 430 ; 530), comprenant une garniture de matière de frottement (32_{LI} ; 132 ; 232 ; 332 ; 432 ; 532) et un renfort de support pour celle-ci (34_{LI} ; 143 ; 234 ; 334 ; 334' ; 434 ; 534) ayant un montant de montage (36 ; 136 ; 236 ; 336 ; 336' ; 436 ; 536), et, pour chaque patin de frottement, un élément de maintien (28_{LI} ; 128 ; 228 ; 428 ; 528) s'étendant fonctionnellement sur le renfort du patin de frottement et ayant une rainure (31_{LI} ; 131 ; 231) de positionnement de patin pour positionner le patin par rapport à l'élément de maintien, et
**caractérisé en ce qu'**il est prévu un dispositif rendant compte de la condition de la garniture de frottement selon l'une quelconque des revendications 1 à 10, et
au moins une cavité d'accouplement (65 ; 165 ; 265 ; 365 ; 365' ; 565) est définie dans le montant de montage du renfort du patin de frottement,
l'appareil de détection de condition (42, 52 ; 142 ; 242 ; 342 ; 442 ; 542) comporte une partie fonctionnelle (44, 54 ; 144 ; 244 ; 344 ; 344' ; 444) disposée dans, ou à proximité immédiate de, ladite garniture de frottement et un chemin conducteur (55) connectant la partie fonctionnelle à au moins une terminaison conductrice (46, 56 ; 146, 246, 346 ; 346' ; 446 ; 546) à l'intérieur de la cavité d'accouplement, accessible depuis l'extérieur de celle-ci, et
le moyen de transmission d'accouplement est supporté par l'élément (63 ; 263 ; 463 ; 563) d'accouplement de signal avançant dans la cavité d'accouplement pour réaliser dans celle-ci une mise en appui conducteur entre au moins un contact d'accouplement de l'élément d'accouplement de signal et ladite terminaison conductrice de l'appareil de détection de condition.

12. Système de frein selon la revendication 11, **caractérisé en ce qu'**au moins l'un dudit contact d'accouplement (64 ; 264) et de la terminaison conductrice (46, 56 ; 246) est agencé de façon à pouvoir être déformé élastiquement et à s'élever vers l'autre et l'élément d'accouplement de signal (63 ; 263) est agencé de façon à être supporté dans la cavité d'accouplement afin de ne pas pouvoir se déplacer de celle-ci en s'éloignant de ladite, au moins une, terminaison conductrice par engagement avec une limite (31' ; 138 ; 237) de la cavité d'accouplement et à réaliser une mise en appui conducteur entre les surfaces du contact d'accouplement et la terminaison conductrice de façon qu'au moins l'un d'eux soit déformé élastiquement et exerce sur l'élément d'accouplement de signal une force de rappel le sollicitant dans ledit engagement.

13. Système de frein selon la revendication 11 ou la revendication 12, **caractérisé en ce que** ledit montant de montage du renfort du patin de frottement présente la cavité d'accouplement définie en lui, qui s'étend jusqu'à une embouchure (67 ; 167 ; 267) à l'extrémité du montant.

14. Système de frein selon l'une des revendications 11 à 13, **caractérisé en ce que** le patin de frottement (230) est maintenu en étant retenu dans l'élément de maintien par un élément de serrage (238), et **caractérisé en ce que** l'élément d'accouplement de signal (263) comprend l'élément de serrage.

15. Système de frein selon l'une quelconque des revendications 11 à 14, **caractérisé en ce que** ledit renfort (34) du patin de frottement présente une ouverture (58) s'étendant dans la matière de frottement et l'appareil (52) de détection de condition comprend un support (53) pour la partie fonctionnelle (54), le chemin conducteur (55) et ses terminaisons conductrices (56) disposés de façon à s'étendre sur le renfort et ladite ouverture, avec la partie fonctionnelle de l'appareil de détection de condition dans l'ouverture.

16. Système de frein selon l'une quelconque des revendications 11 à 15, **caractérisé en ce que** l'appareil (52) de détection de condition comprend un support (53) formé d'une matière électriquement isolante pour au moins le chemin conducteur (55) et les terminaisons conductrices (56), la partie fonctionnelle (54) et les terminaisons conductrices étant situées sur des côtés opposés de celui-ci, ledit support et les terminaisons conductrices étant agencés de façon à isoler au moins un contact d'accouplement (64) de l'élément d'accouplement de signal du renfort de patin.

17. Patin de frottement (30_{LI} ; 130 ; 230 ; 330 ; 330' ; 430 ; 530) de système de frein, comportant une garniture de matière de frottement (32_{LI} ; 132 ; 232 ; 332 ; 332' ; 432 ; 532) et un renfort de support pour celle-ci (34_{LI} ; 143 ; 234 ; 334 ; 334' ; 434 ; 534) ayant un montant de montage (36 ; 136 ; 236 ; 336 ; 336' ; 436 ; 536), convenant à un système de frein de véhicule comprenant, pour ledit patin de frottement, un élément de maintien (28_{LI} ; 128 ; 228 ; 428 ; 528) agencé de façon à recouvrir fonctionnellement le renfort d'un patin de frottement maintenu et recevoir, dans une rainure (31_{LI} ; 131 ; 231) de positionnement de patin, ledit montant de montage du renfort, et **caractérisé par** une cavité d'accouplement (65 ; 165 ; 265 ; 365 ; 365' ; 565) définie dans le montant de montage de renfort, un dispositif rendant compte de la condition de la garniture de frottement selon l'une quelconque des revendications 1 à 10 dans lequel l'appareil de détection de garniture (42, 52 ; 142 ; 242 ; 342 ; 442 ; 542) comporte une partie fonctionnelle (44, 54 ; 144 ; 244 ; 344 ; 344' ; 444) disposée dans, ou à proximité immédiate de, la garniture, et un chemin conducteur (55) reliant la partie fonctionnelle à au moins une terminaison conductrice (46, 56 ; 146 ; 246 ; 346 ; 346' ; 446 ; 546) avançant dans la cavité d'accouplement et conçu pour y établir un contact de frottement avec au moins un contact d'accouplement (64 ; 264 ; 464 ; 564) d'un élément d'accouplement de signal (63 ; 263 ; 463 ; 563).

18. Patin de frottement selon la revendication 17, **caractérisé en ce que** l'appareil de détection de condition comprend un support d'un seul bloc (53) pour la partie fonctionnelle, le chemin conducteur et les terminaisons conductrices, disposé de façon à s'étendre au-dessus du renfort (34).

19. Patin de frottement selon la revendication 17 ou la revendication 18, **caractérisé en ce que** le renfort présente une ouverture (58) avançant dans la garniture de frottement et contenant en elle la partie fonctionnelle de l'appareil de détection de condition.

20. Patin de frottement selon l'une quelconque des revendications 17 à 19, **caractérisé en ce que** la cavité d'accouplement (65) comprend un évidement (66) de renfort ouvert dans une direction s'éloignant de la garniture de frottement (32_{LI}), évidement dans lequel les terminaisons conductrices et, si cela est approprié, le support, sont logés.

21. Patin de frottement selon la revendication 20, **caractérisé en ce que** l'évidement (66) de renfort s'étend le long de l'élément de montage jusqu'à une embouchure (67) située à l'extrémité du patin.
